(19)

Europäisches
Patentamt
European
Patent Office
Office européen
des brevets

(11) EP 3 379 537 A2

(12) EUROPEAN PATENT APPLICATION

(43) Date of publication:
26.09.2018 Bulletin 2018/39

(51) Int Cl.:
G11C 7/04 (2006.01)     G11C 16/34 (2006.01)

(21) Application number: 17195769.9

(22) Date of filing: 10.10.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 07.12.2016 JP 2016237421

(71) Applicant: Renesas Electronics Corporation
Tokyo
135-0061 (JP)

(72) Inventors:
• TAKEUCHI, Kan
  Koutou-ku, Tokyo 135-0061 (JP)
• TSUCHIYA, Fumio
  Koutou-ku, Tokyo 135-0061 (JP)
• KONISHI, Shinya
  Koutou-ku, Tokyo 135-0061 (JP)

(74) Representative: Addiss, John William et al
Mewburn Ellis LLP
City Tower
40 Basinghall Street
London EC2V 5DE (GB)

(54) SEMICONDUCTOR DEVICE

(57) To provide a semiconductor device that can predict wear-out failure with high accuracy based on an accumulated value of degradation stress, such as a power-source voltage or an environmental temperature, imposed to the semiconductor device, the semiconductor device includes a first circuit that holds a first accumulated degradation stress count value, a second circuit that holds a second accumulated degradation stress count value, a third circuit that holds a count value of an accumulated operating time or a value corresponding thereto, and a fourth circuit or an operating unit that receives the first accumulated degradation stress count value, the second accumulated degradation stress count value, and the count value of the accumulated operating time or the value corresponding to the value of the accumulated operating time.

FIG. 1

EP 3 379 537 A2

**Description**

CROSS-REFERENCE TO RELATED APPLICATIONS

The disclosure of Japanese Patent Application No. 2016-237421 filed on December 7, 2016 including the specification, drawings and abstract is incorporated herein by reference in its entirety.

BACKGROUND

The present disclosure relates to a semiconductor device and is applicable to a semiconductor device, for example, having a degradation stress detecting function.

Japanese Unexamined Patent Application Publication No. 2011-227756 discloses: "A terminal device is provided with a high-temperature detection counter circuit that detects a temperature of the device, integrates a stress accelerating time weighted in accordance with the detected temperature as a stress count value, and outputs an interrupt signal when the stress count value reaches a set value or more, and a CPU of controlling the operation of the device. When a total value of an accumulated stress accelerating time obtained by counting the interrupt signal from the high-temperature detection counter circuit in an accumulating manner and a system time from a timer circuit exceeds a set stress management time, the CPU performs rewriting into a non-volatile memory."

SUMMARY

An aim of the present disclosure is to provide a semiconductor device capable of predicting wear-out failure based on an accumulated value of degradation stress caused by a power-source voltage and an environmental temperature imposed on the semiconductor device.

Other aims and novel features will be apparent from the description of this specification and the attached drawings.

The outline of the typical one of the present disclosure is briefly described as follows.

A semiconductor device includes a first circuit that holds a first accumulated degradation stress count value, a second circuit that holds a second accumulated degradation stress count value, a third circuit that holds a count value of an accumulated operating time or a value corresponding thereto, and a fourth circuit or an operating unit that receives the first accumulated degradation stress count value, the second accumulated degradation stress count value, and the count value of the accumulated operating time or the value corresponding to the value of the accumulated operating time.

According to the above semiconductor device, it is possible to predict wear-out failure with high accuracy based on a plurality of accumulated degradation stress count values.

BRIEF DESCRIPTION OF THE DRAWINGS

FIG. 1 is an explanatory diagram of a semiconductor device according to a first example.
FIG. 2 illustrates a configuration example of an operating circuit C12 in FIG. 1.
FIG. 3 illustrates another configuration example of the operating circuit C12 in FIG. 1.
FIG. 4A illustrates a configuration example of a first accumulated degradation-stress-amount holding circuit T1 in FIG. 1.
FIG. 4B illustrates a configuration example of a second accumulated degradation-stress-amount holding circuit T2 in FIG. 1.
FIG. 4C illustrates a configuration example of an accumulated operating-time holding circuit TM in FIG. 1.
FIG. 5 illustrates another configuration example of the first accumulated degradation-stress-amount holding circuit T1, the second accumulated degradation-stress-amount holding circuit T2, and the accumulated operating-time holding circuit TM in FIG. 1.
FIG. 6 illustrates another configuration example of the first accumulated degradation-stress-amount holding circuit T1, the second accumulated degradation-stress-amount holding circuit T2, and the accumulated operating-time holding circuit TM in FIG. 5.
FIG. 7 is a circuit diagram illustrating a configuration of a ring oscillator.
FIG. 8 is a schematic diagram of an entire configuration of a system using the semiconductor device of FIG. 1.
FIG. 9A illustrates a first probability distribution of a temperature of a semiconductor device for an accumulated time period.
FIG. 9B illustrates a relation between a correlation index and a value q in FIG. 9A.

FIG. 9C illustrates a second probability distribution of the temperature of the semiconductor device for the accumulated time period.

FIG. 9D illustrates a relation between the correlation index and the value q in FIG. 9C.

FIG. 9E illustrates a third probability distribution of the temperature of the semiconductor device for the accumulated time period.

FIG. 9F illustrates a relation between the correlation index and the value q in FIG. 9E.

FIG. 10A is an explanatory diagram of accuracy of the correlation index.

FIG. 10B is an explanatory diagram of the accuracy of the correlation index when the value q is made larger.

FIG. 11A illustrates a first probability distribution of the temperature of the semiconductor device for the accumulated time period.

FIG. 11B is an explanatory diagram of a correlation index Kq in a case where the horizontal axis in FIG. 9B represents $(q-1)*\sqrt{q}$.

FIG. 11C illustrates a second probability distribution of the temperature of the semiconductor device for the accumulated time period.

FIG. 11D is an explanatory diagram of the correlation index Kq in a case where the horizontal axis in FIG. 9D represents $(q-1)*\sqrt{q}$.

FIG. 11E illustrates a third probability distribution of the temperature of the semiconductor device for the accumulated time period.

FIG. 11F is an explanatory diagram of the correlation index Kq in a case where the horizontal axis in FIG. 9F represents $(q-1)*\sqrt{q}$.

FIG. 12A illustrates an entire implementation flow of a first embodiment of the first example.

FIG. 12B is a flowchart of a detailed calculation flow in Step S6 in FIG. 12A.

FIG. 13A illustrates an entire implementation flow of a second embodiment of the first example.

FIG. 13B is a flowchart of a detailed determination flow in Step S13 in FIG. 13A.

FIG. 14 is an explanatory diagram of a semiconductor device according to a second example.

FIG. 15A illustrates a configuration example of a second accumulated degradation-stress-amount holding circuit VT2.

FIG. 15B illustrates a configuration example of an operating circuit C12C.

FIG. 16A is a circuit diagram illustrating a configuration of a ring oscillator in FIG. 15A.

FIG. 16B illustrates a configuration example of a current-source control circuit in FIG. 16A.

FIG. 17 is an explanatory diagram of a range of voltage variation of a semiconductor device.

FIG. 18 is an explanatory diagram of a variation of a correlation index.

FIG. 19 is a flowchart of an entire implementation flow of the second example.

FIG. 20 is a flowchart of a detailed determination flow in Step S23 in FIG. 19.

FIG. 21 is an explanatory diagram of a modified example of FIG. 14.

FIG. 22 is an explanatory diagram of a semiconductor device according to a third example.

FIG. 23A illustrates an entire implementation flow of the third example.

FIG. 23B is a flowchart of a detailed calculation flow in Step S43 in FIG. 23A.

FIG. 24 is an explanatory diagram of a semiconductor device according to a fourth example.

FIG. 25 illustrates a specific configuration example of a processing circuit in FIG. 24.

FIG. 26 illustrates an operation waveform of a square processing circuit P12 in FIG. 25.

DETAILED DESCRIPTION

When a semiconductor device is used for long duration, it comes to wear-out failure. When the semiconductor device is subject to degradation stress continuously during the use and an accumulated amount of the degradation stress reaches a certain value, failure occurs with a predetermined probability. The lifetime until the failure depends on a power-source voltage and an environmental temperature. The inventors have studied not the direct capture of the wear-out failure phenomenon but prediction of the wear-out failure based on the degradation stress accumulated value due to the power-source voltage and the environmental temperature imposed on the semiconductor device.

As described in Reference Document, in wear-out failure factors such as Time-Dependent Dielectric Breakdown of a gate oxide in a device (hereinafter, referred to as a gate-TDDB or TDDB) and Negative Bias Temperature Instability (hereinafter, referred to as NBTI), the lifetime depends on, for example, the -n-th power of a voltage ($V^{-n}$) (power-law model) or the reciprocal of the exponent ($\exp(-B*V)$) (V model), and also depends on the exponent of the reciprocal of a temperature ($\exp(Ea/kT)$) at the same time. In wear-out failure factors such as electromigration (EM) and stress migration (SM), the lifetime depends on the exponent of the reciprocal of a temperature ($\exp(Ea/kT)$), with a small voltage dependence. Here, n, B, and Ea represent the coefficients inherent to a wear-out failure factor, and k is a Boltzmann constant. The contents of Reference Document are incorporated into the present application by reference.
[Reference Document] "Failure Mechanisms and Models for Semiconductor Devices" JEDEC publication No. 122E, http://web.cecs.pdx.edu/~cgshirl/Documents/jep122E.pdf

The stress amount can be represented by the reciprocal of the lifetime, as represented by Expressions (1) and (2).

In a case of the gate-TDDB and the NBTI:

$$1/\tau(T, V) \propto 1/(V^{-n} \times \exp(Ea/kT)) = V^n \times \exp(-Ea/kT) \quad (1)$$

Here, $\tau(T, V)$ is a function of a temperature (T) and a voltage (V), and the wear-out failure lifetime depending on T and V.

In a case of the electromigration and the stress migration:

$$1/\tau(T) \propto 1/(\exp(Ea/kT)) = \exp(-Ea/kT) \quad (2)$$

Here, $\tau(T)$ is a function of the temperature (T), and the wear-out failure lifetime depending on T.

In a case where the stress amount per unit time at 125 °C is assumed as 1, when a temperature dependence coefficient (Ea) is assumed as 1 eV, for example, the stress amount becomes about three times at 140 °C (lifetime becomes 1/3) and about 5.5 times at 150 °C (lifetime becomes 1/5.5) . The stress amount is reduced at a temperature lower than 125 °C; for example, at 110 °C, it becomes about 0.3 times (lifetime becomes 3. 3 times), and at 100 °C, about 0.15 times (lifetime becomes 6.7 times) .

The inventors of the present application have studied that an accumulated degradation stress counter for prediction of wear-out failure is included in a semiconductor device, and have found the following problems.

In a case where the accumulated degradation stress counter is provided for predicting wear-out failure with regard to a specific degradation factor when a semiconductor device is designed, another degradation factor that is not considered in design may be of concern later. Therefore, it is necessary to consider and expect the other degradation factor not considered in design, in advance.

Also, it is necessary to consider a method for proving or confirming that an accumulated degradation stress count value of the accumulated degradation stress counter is reliable.

Embodiments are described below, with reference to the drawings. In the following description, the same components are labeled with the same reference signs and redundant description may be omitted. Here, although the drawings may be schematically illustrated with regard to the width, thickness, shape, and the like of each portion as compared with those in an actual form for the sake of making the description clearer, those are merely an example and are not intended to limit the interpretation of the present invention.

First Example

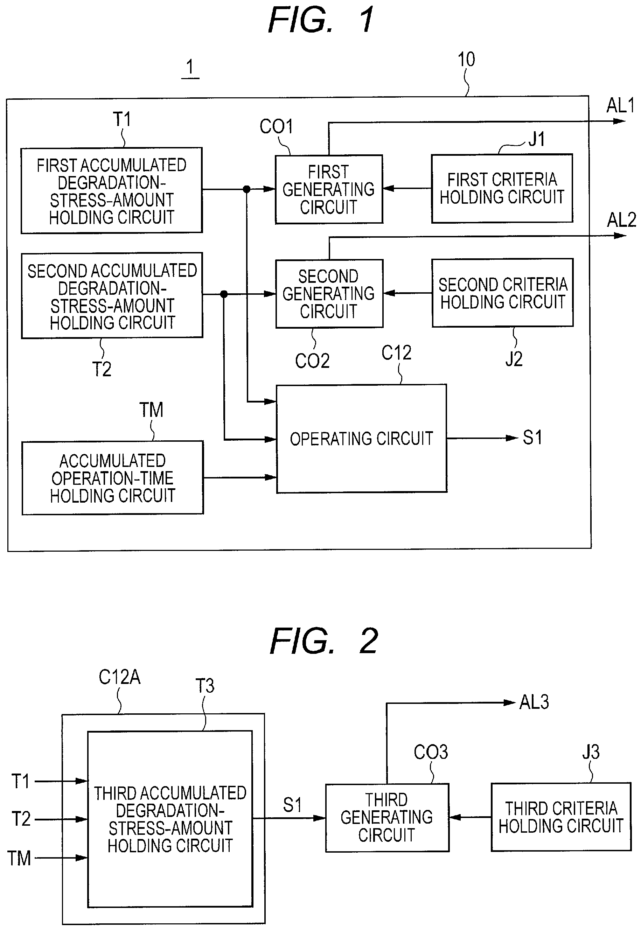

FIG. 1 is an explanatory diagram of a semiconductor device according to a first example. A semiconductor device 1 includes an accumulated degradation stress detecting circuit 10. The accumulated degradation stress detecting circuit 10 includes a circuit for holding a first accumulated degradation stress count value (a first circuit, a first accumulated degradation-stress-amount holding circuit) T1, a circuit for holding a count value of a first criteria (determination standard) (a first criteria holding circuit) J1, and a circuit for generating an accumulated stress alarm signal AL1 (a first generating circuit) C01. The circuit C01 for generating the accumulated stress alarm signal AL1 compares the first accumulated degradation stress count value and the count value of the first criteria with each other to generate the accumulated stress alarm signal AL1. The accumulated degradation stress detecting circuit 10 further includes a circuit for holding a second accumulated degradation stress count value (a second circuit, a second accumulated degradation-stress-amount holding circuit) T2, a circuit for holding a count value of a second criteria (determination standard) (a second criteria holding circuit) J2, and a circuit for generating an accumulated stress alarm signal AL2 (a second generating circuit) C02. The circuit C02 for generating the accumulated stress alarm signal AL2 compares the second accumulated degradation stress count value and the count value of the second criteria with each other to generate the accumulated stress alarm signal AL2.

The accumulated degradation stress detecting circuit 10 further includes a circuit for holding a count value of an accumulated operating time of the semiconductor device 1 or a value corresponding that count value (a third circuit, an accumulated operating-time holding circuit) TM and a circuit for receiving the first and second accumulated degradation stress count values and the count value of the accumulated operating time or the value corresponding to the count value of the accumulated operating time (a fourth circuit or an operating unit, an operating circuit) C12. The operating circuit C12 performs desired calculation based on the first and second accumulated degradation stress count values and the count value of the accumulated operating time, thereby generating a signal S1 as a calculation result.

When the count value of each of the first and second accumulated degradation-stress-amount holding circuits T1 and T2 reaches a predetermined value or more, a corresponding one of the first and second generating circuits C01 and C02 outputs the alarm signal AL1 or AL2. The semiconductor device 1 is formed by one semiconductor chip (semiconductor substrate), but is not limited thereto. The first and second generating circuits (C01 and C02), the first and second criteria holding circuits (J1 and J2), and the operating circuit C12 may be configured as hardware circuits in the semiconductor device 1, or may be configured by software, for example, by a central processing unit CPU provided in the semiconductor device 1. Alternatively, those circuits may be achieved by an external data processing device, an external server, or the like, coupled to the semiconductor device 1.

The first accumulated degradation-stress-amount holding circuit T1 is provided for evaluation of the degree of wear-out failure with regard to a first degradation factor (wear-out failure factor) having a temperature dependence Ea1, and is configured in such a manner that the number of counts Cnt1 for a certain period during which a temperature T can be regarded as being approximately constant is proportional to $\exp(-Ea1/kT)$. The number of counts Cnt1 is represented by $Cnt1 = C1 * \exp(-Ea1/kT)$. C1 is a constant related to the temperature dependence of the number of counts.

The second accumulated degradation-stress-amount holding circuit T2 is provided for evaluation of the degree of wear-out failure with regard to a second degradation factor (wear-out failure factor) having a temperature dependence Ea2, and is configured in such a manner that the number of counts Cnt2 for a certain period during which the temperature T can be regarded as being approximately constant is proportional to $\exp(-Ea2/kT)$. The number of counts Cnt2 is represented by $Cnt2 = C2 * \exp(-Ea2/kT)$. C2 is a constant related to the temperature dependence of the number of counts. Further, the temperature dependence Ea2 can be represented by $Ea2 = q2 * Ea1$.

The accumulated operating-time holding circuit TM holds an accumulated count time of each of the first and second accumulated degradation-stress-amount holding circuits T1 and T2 or a value corresponding thereto. The corresponding value is a value N that represents, in a case where a counting operation is divided into unit counting operations (each of which is a counting operation for a time period during which a temperature can be regarded as being approximately constant, and occurs at a predetermined period), the accumulated number of times of the unit counting operation, for example. The following description is given by using the value N. If the accumulated count time is used, it can be represented by N*"time for one unit counting operation". Alternatively, in a configuration in which the count values Cnt1 and Cnt2 are intermittently acquired by the accumulated stress counters respectively provided in the first and second accumulated degradation-stress-amount holding circuits T1 and T2, the corresponding value is a value N that represents the accumulated number of times of an intermittent counting operation. In a case of the intermittent operation, it is necessary to consider that the accumulated count time is not equal to the accumulated stress time. However, a ratio of them has been found at the time of design, and therefore can be corrected. A value other than the value N, which is equivalent to the value N, may be used in accordance with the spirit of the present disclosure.

<First Embodiment of First Example>

FIG. 2 illustrates a configuration example of the operating circuit C12 in FIG. 1. An operating circuit C12A includes a third accumulated degradation-stress-amount holding circuit (virtual) T3. In this case, the semiconductor device 1 is further provided with a third generating circuit C03 and a third criteria holding circuit J3.

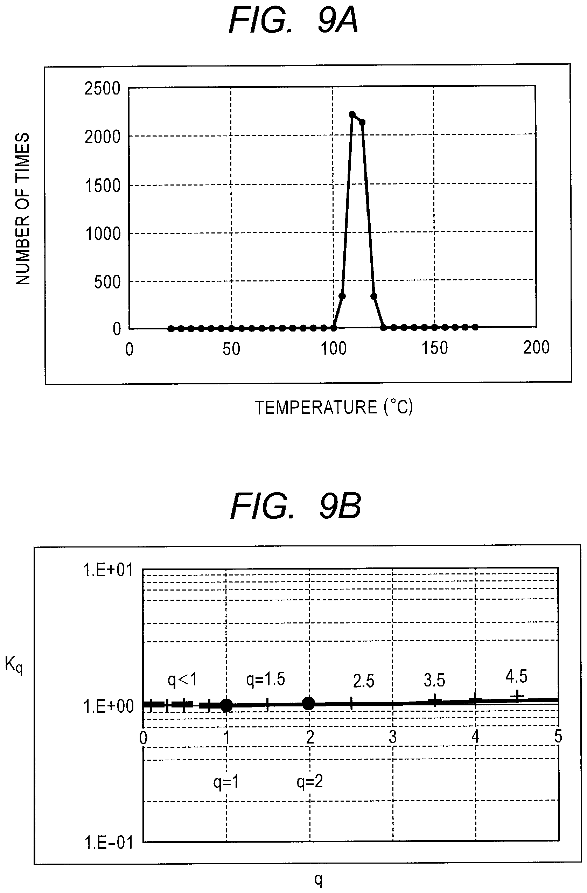

The third accumulated degradation-stress-amount holding circuit (virtual) T3 calculates a virtual accumulated degradation stress count value with regard to a third wear-out failure factor (degradation factor) having a temperature dependence Ea3 ($Ea3 = q * Ea1$) different from the temperature dependences Ea1 and Ea2. This virtual accumulated degradation stress count value is calculated on the basis of a measured accumulated value of the number of counts Cnt1 that is the accumulated value of the first accumulated degradation-stress-amount holding circuit T1 (the accumulated degradation stress count value), a measured accumulated value of the number of counts Cnt2 that is the accumulated value of the second accumulated degradation-stress-amount holding circuit T2 (the accumulated degradation stress count value), and an actually measured value of the value N of the accumulated operating-time holding circuit TM. A specific example of a calculating method will be described later with reference to FIGS. 9A to 9F, 10A, 10B, and 11A to 11F.

The third criteria holding circuit J3 is a circuit that holds a count value of a wear-out criteria (determination standard) with regard to the third degradation factor (wear-out failure factor) having the temperature dependence Ea3. The third generating circuit C03 compares the third virtual accumulated degradation stress count value and the count value of the third criteria with each other to generate an accumulated stress alarm signal AL3. When the count value of the third accumulated degradation-stress-amount holding circuit T3 reaches a predetermined value or more, the third generating circuit C03 outputs the alarm signal AL3. In FIG. 2, the third generating circuit C03 and the third criteria holding circuit J3 are provided outside the operating circuit C12A. However, they may be provided inside the operating circuit C12A. In addition, in view of the spirit of the present invention, it is suitable to achieve the operating circuit C12A including the third accumulated degradation-stress-amount holding circuit T3, the third generating circuit C03, and the third criteria holding circuit J3 by implementing equivalent functions thereto by software.

According to FIG. 2, it is possible to calculate the accumulated degradation stress count value with regard to the third degradation factor having the temperature dependence Ea3, which is different from the actually measured value of first degradation factor having the temperature dependence Ea1 and the actually measured value of second degradation factor having the temperature dependence Ea2, and to determine that the third degradation factor has reached the wear-out failure criteria. Therefore, a semiconductor device can be obtained that can determine the degree of risk of wear-out failure with regard to the third degradation factor, even in a case where the third degradation factor different from the first and second degradation factors that are considered in design is concerned later.

<Second Embodiment of First Example>

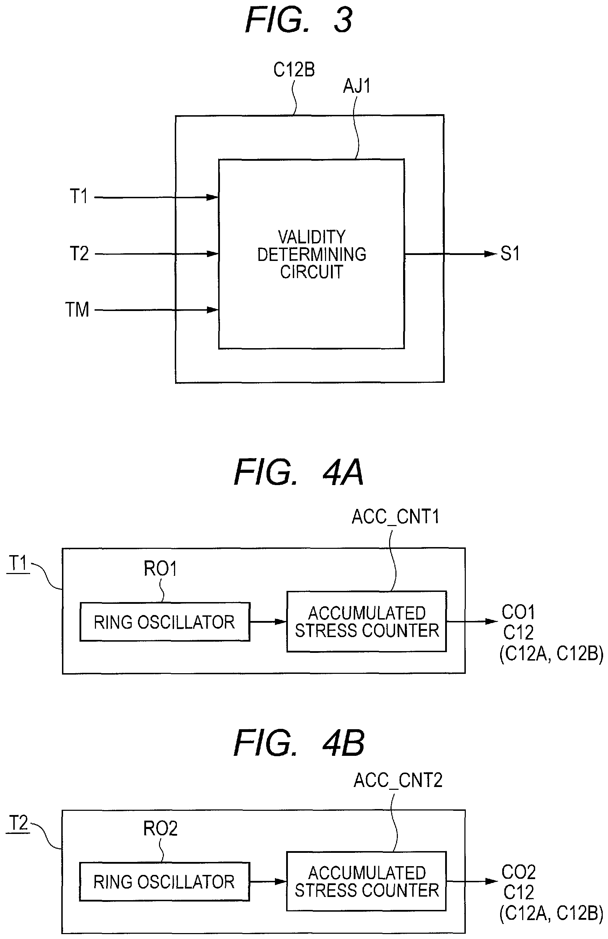

FIG. 3 illustrates another configuration example of the operating circuit C12 in FIG. 1. An operating circuit C12B includes a circuit for determining validity (validity determining circuit) AJ1. This validity determining circuit AJ1 calculates a correlation index $K_{q2}$ between the accumulated value of the number of counts Cnt1 that is the accumulated value of the first accumulated degradation-stress-amount holding circuit T1 (the accumulated degradation stress count value) and the accumulated value of the number of counts Cnt2 that is the accumulated value of the second accumulated degradation-stress-amount holding circuit T2 (the accumulated degradation stress count value). In the following description, it is assumed that the accumulated value of the number of counts Cnt1 is referred to as a Cnt1 accumulated value, and the accumulated value of the number of counts Cnt2 is referred to as a Cnt2 accumulated value. The correlation index $K_{q2}$ is calculated on the basis of the Cnt1 accumulated value of the first accumulated degradation-stress-amount holding circuit T1, the Cnt2 accumulated value of the second accumulated degradation-stress-amount holding circuit T2, and the actually measured value of the value N of the accumulated operating-time holding circuit TM. It is determined whether the Cnt1 accumulated value and the Cnt2 accumulated value are appropriate measured values on the basis of whether the correlation index $K_{q2}$ is within a predetermined range. A determination result is output as the signal S1. Here, q2 = Ea2/Ea1.

The correlation index $K_{q2}$ is given by the following Expression (3) .

$$K_{q2} = (\text{Cnt2 accumulated value})/\{(\text{Cnt1 accumulated value})^{q2}/N^{q2-1}\}$$

$$(3)$$

N is the accumulated number of times of the unit counting operation (i.e., a counting operation for a time period during which the temperature can be regarded as being approximately constant and which occurs at a predetermined period), and an actually measured value of the accumulated operating-time holding circuit TM.

The validity of the correlation index $K_{q2}$ is determined by using the following Expression (4), for example.

$$(C2/C1^{q2}) \leq K_{q2} \leq A_{q2} * (C2/C1^{q2})   (4)$$

where each of C1 and C2 is a constant related to temperature dependence of a corresponding number of counts, and Cnt1 = C1*exp(-Ea1/kT) and Cnt2 = C2*exp(-Ea2/kT). $A_{q2}$ is a constant that can be determined in advance with respect to q2 = Ea2/Ea1 on the basis of a state where temperature variation is the largest in a range of an expected temperature profile for a semiconductor device. Cnt2 and Cnt1 have a relation represented by the following Expression (5).

$$\text{Cnt2} = C2 * \exp(-Ea2/kT) = C2 * \{\exp(-Ea1/kT)\}^{q2}$$

$$= (C2/C1^{q2}) * (\text{Cnt1})^{q2}   (5)$$

The correlation index $K_{q2}$ represented by Expression (3) and the determining Expression (4) for determination described above are related to a relation between a value obtained by accumulating the count value Cnt1 and then raising the accumulated count value to the q2-th power and a value obtained by raising the count value Cnt1 to the q2-th power and then accumulating the raised count value, and are derived from the studies described later. For example, in a case where q2 = 2, the constant $A_{q2}$ in Expression (4) is set to 4. In this manner, the constant $A_{q2}$ in accordance with the value of q2 can be set in advance. This will be described in more detail later.

According to FIG. 3, in a case where abnormality occurs in either of the actually measured count values of the first accumulated degradation-stress-amount holding circuit T1 and the second accumulated degradation-stress-amount holding circuit T2, it is possible to detect the abnormality based on Expression (4) described above. Therefore, by discarding count values obtained in the ni-th unit counting operation, ni being a specific number, to prevent abnormal values from being added to the accumulated values, for example, the accumulated degradation stress count values with high reliability can be obtained. Alternatively, at a time when either of the first accumulated degradation-stress-amount holding circuit T1 and the second accumulated degradation-stress-amount holding circuit T2 reaches the wear-out failure criteria, it is possible to determine that both the accumulated degradation stress count values of the first accumulated degradation-stress-amount holding circuit T1 and the second accumulated degradation-stress-amount holding circuit T2 are appropriate and to recognize that risk of wear-out failure is increasing with confidence.

Next, a specific configuration example for achieving the first accumulated degradation-stress-amount holding circuit T1, the second accumulated degradation-stress-amount holding circuit T2, and the accumulated operating-time holding circuit TM in FIG. 1 is illustrated in FIGS. 4A, 4B, 4C, 5, and 6.

<First Specific Configuration Example of First Example>

FIG. 4A illustrates a configuration example of the first accumulated degradation-stress-amount holding circuit T1 in FIG. 1. The first accumulated degradation-stress-amount holding circuit T1 includes a ring oscillator RO1 and an accumulated stress counter ACC_CNT1. Oscillation of the ring oscillator RO1 having frequency characteristics in proportion to $\exp(-Ea1/kT)$ is counted by the accumulated stress counter ACC_CNT1. The oscillation frequency of the ring oscillator RO1 is an oscillation count per second. An output of the accumulated stress counter ACC_CNT1 is coupled to inputs of the first generating circuit C01 and the operating circuit (C12, C12A, or C12B).

FIG. 4B illustrates a configuration example of the second accumulated degradation-stress-amount holding circuit T2 in FIG. 1. The second accumulated degradation-stress-amount holding circuit T2 includes a ring oscillator RO2 and an accumulated stress counter ACC_CNT2. Oscillation of the ring oscillator RO2 having frequency characteristics in proportion to $\exp(-Ea2/kT)$ is counted by the accumulated stress counter ACC_CNT2. The oscillation frequency of the ring oscillator RO2 is an oscillation count per second. An output of the accumulated stress counter ACC_CNT2 is coupled to inputs of the second generating circuit C02 and the operating circuit (C12, C12A, or C12B).

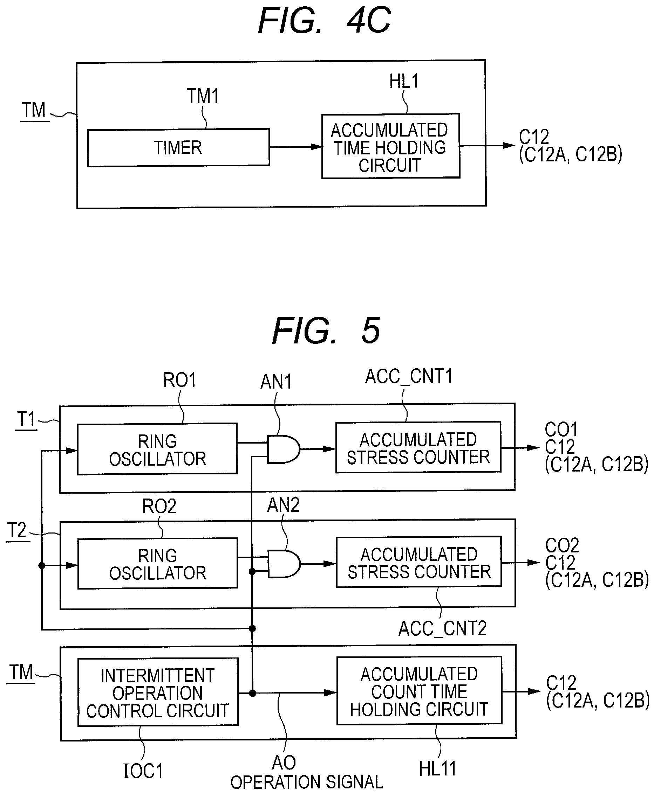

FIG. 4C illustrates a configuration example of the accumulated operating-time holding circuit TM in FIG. 1. The accumulated operating-time holding circuit TM includes a timer TM1 and an accumulated time holding circuit HL1. The accumulated time holding circuit HL1 receives an output of the timer TM1 as its input and holds it. The accumulated time holding circuit HL1 holds an accumulated count time of each of the accumulated stress counters ACC_CNT1 and ACC_CNT2 respectively provided in the first and second accumulated degradation-stress-amount holding circuits T1 and T2 or a value corresponding thereto. An output of the accumulated time holding circuit HL1 is coupled to an input of the operating circuit (C12, C12A, or C12B).

<Second Specific Configuration Example of First Example>

FIG. 5 illustrates another configuration example of the first accumulated degradation-stress-amount holding circuit T1, the second accumulated degradation-stress-amount holding circuit T2, and the accumulated operating-time holding circuit TM in FIG. 1. The ring oscillators (RO1 and RO2) and the accumulated stress counters (ACC_CNT1 and ACC_CNT2) are the same as those illustrated in FIGS. 4A and 4B and referred to in the corresponding description. Portions different from those in FIGS. 4A, 4B, and 4C are described below.

In FIG. 5, the accumulated operating-time holding circuit TM includes an intermittent operation control circuit IOC1 and an accumulated count time holding circuit HL11. Each ring oscillator (RO1 or RO2) oscillates only in a time period of an intermittent counting operation on the basis of a high level of an operation signal AO output from the intermittent operation control circuit IOC1. The high level of the operation signal AO instructs an intermittent operation or a time period of the intermittent operation of the accumulated degradation stress detecting circuit 10, and a low level of the operation signal AO indicates non-operation or a non-operation time period of the accumulated degradation stress detecting circuit 10. To each of the accumulated stress counter (ACC_CNT1 and ACC_CNT2), oscillation of a corresponding one of the ring oscillators (RO1 and RO2) is input in its time period of intermittent counting operation by a corresponding one of AND circuits AN1 and AN2 controlled by the operation signal. Each accumulated stress counter (ACC_CNT1 or ACC_CNT2) counts the input oscillation. The accumulated count time holding circuit HL11 counts the number of times of the intermittent counting operation, and holds the accumulated number of times N as a count value. From a viewpoint of an accumulated amount of degradation, it is possible to obtain sufficient accuracy with respect to a temperature change, even by monitoring the oscillation of each ring oscillator (RO1 or RO2) at an appropriate time interval. Therefore, it is possible to reduce power consumption of the accumulated degradation stress detecting circuit 10 and power consumption of the accumulated degradation stress detecting circuit 10 and power consumption of the semiconductor device 1 as a whole without lowering accuracy of prediction of wear-out failure of the accumulated degradation stress detecting circuit 10 by the intermittent operation control circuit IOC1.

<Third Specific Configuration Example of First Example>

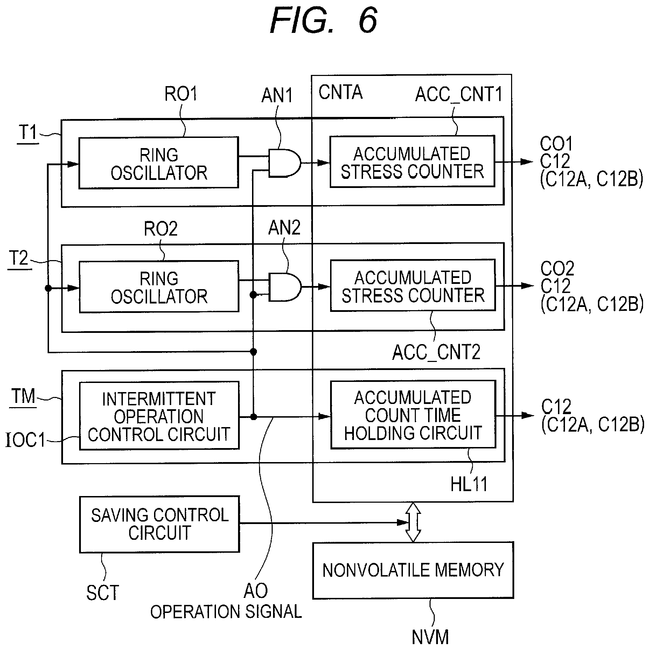

FIG. 6 illustrates another configuration example of the first accumulated degradation-stress-amount holding circuit T1, the second accumulated degradation-stress-amount holding circuit T2, and the accumulated operating-time holding circuit TM in FIG. 5. Portions different from those in FIG. 5 are described below.

A saving control circuit SCT is further provided, which saves count values of the accumulated stress counters (ACC_CNT1 and ACC_CNT2) and the accumulated count time holding circuit HL11 into a non-volatile memory NVM. As the non-volatile memory NVM, a flash memory can be used. Data stored in the flash memory is held even when a power-source voltage of the semiconductor device 1 is cut or interrupted or the semiconductor device 1 is reset. In order to hold an accumulated amount of degradation (an accumulated count value), the count values of the accumulated stress counters (ACC_CNT1 and ACC_CNT2) and the accumulated count time holding circuit HL11 should not be lost by cutting or interruption of the power-source voltage of the semiconductor device 1 or a reset operation of the semiconductor device 1. The accumulated degradation stress detecting circuit 10 must perform accumulation from shipment of the semiconductor device 1 to the market until the product lifetime ends. The accumulated stress counters (ACC_CNT1 and ACC_CNT2) and the accumulated count time holding circuit HL11 may be formed in a semiconductor area to which a power-source potential backed up by a battery is always applied. When the circuit (saving control circuit) SCT for controlling saving into the non-volatile memory NVM is added to the semiconductor device 1 as illustrated in FIG. 6, the accumulated stress counters (ACC_CNT1 and ACC_CNT2) and the accumulated count time holding circuit HL11 can be formed in a normal logic area. The normal logic area means a semiconductor area in which a logic circuit or the like is formed and in which supply of the power-source potential is cut or interrupted by cutting or interruption of the power-source potential of the semiconductor device 1 or the reset operation of the semiconductor device 1. A counter array CNTA represents an area in the logic area, in which the accumulated stress counters (ACC_CNT1 and ACC_CNT2) and the accumulated count time holding circuit HL11 are formed.

<Ring Oscillator>

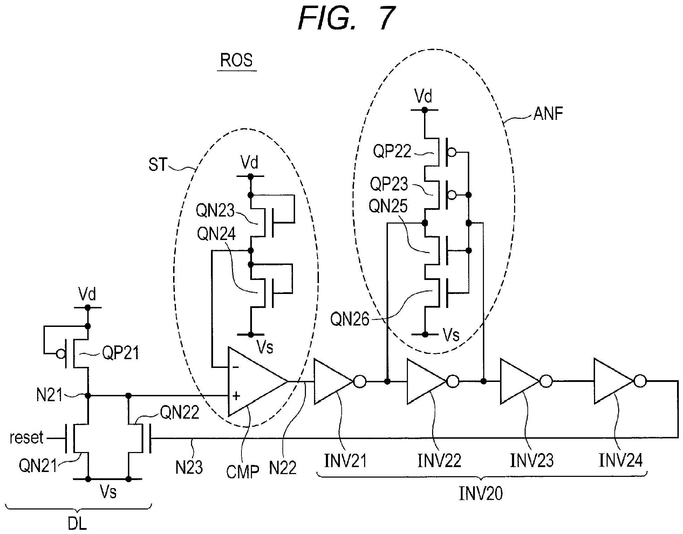

FIG. 7 is a circuit diagram illustrating a configuration of a ring oscillator. A ring oscillator ROS of FIG. 7 can be used as the ring oscillators RO1 and RO2 illustrated in FIGS. 4A, 4B, 5, and 6. The ring oscillator ROS has frequency characteristics in proportion to $\exp(-Ea/kT)$, the reciprocal of the lifetime $\tau(T)$ with regard to a wear-out failure factor. An accumulated degradation stress amount with regard to a wear-out failure factor that has a small voltage dependence and a large temperature dependence, such as electromigration and stress migration, can be obtained from the oscillation frequency of the ring oscillator ROS. The ring oscillator ROS achieves the oscillation frequency in proportion to an off current of a PMOS transistor (QP21) .

The ring oscillator ROS includes a delay circuit DL, a stabilizing circuit ST, and a delay inverter group INV20. The delay circuit DL includes the PMOS transistor QP21 and NMOS transistors QN21 and QN22. The stabilizing circuit ST includes NMOS transistors QN23 and QN24 for generating a reference voltage (Vref), and a comparator CMP. The delay inverter group INV20 includes inverters INV21, INV22, INV23, and INV24.

An operation is described below. When a reset signal (reset) becomes a high level, a node N21 is reset at a low level. The reference voltage Vref is an intermediate potential between the high level (Vd) and the low level (Vs), and a node N22 that is an output of the comparator (a differential amplifier) CMP becomes its low level. Consequently, a node N23 becomes the low level. After the rest signal is returned to the low level, the node N21 comes into a floating state at the low level. When each threshold voltage absolute value of the NMOS transistors QN21 and QN22 is set to be larger than a threshold voltage absolute value of the PMOS transistor QP21, an off leakage current of the PMOS transistor QP21 is dominant and the potential of the node N21 gradually rises from the low level to the high level. The PMOS transistor QP21 is a leakage pull-up element. When the potential of the node N21 becomes Vref or more, the output node N22 of the AMP comparator CMP changes from the low level to the high level, and after a delay by the inverter group INV20 (inverters INV21 to INV24 of four stages), the node N23 becomes the high level. Consequently, the node N21 returns to the low level. Oscillation is performed through this repetition.

A time period from a time when the node N21 becomes the low level to a time when the node N21 returns to the low level after shifting from the low level to the high level is approximately equal to the sum of a time period (t1) in which the potential of the node N21 rises from the low level to Vref due to the off leakage current of the PMOS transistor QP21 and a time period (t2) after the node N22 reaches the high level until the node N21 reaches the low level due to the delay of the inverter group INV20. Further, since t1 >> t2, the oscillation frequency is approximately proportional to the off leakage current of the PMOS transistor QP21. Since the off leakage current depends on the exponent of the reciprocal of the temperature ($\exp(-1/T)$), a ring oscillator having a large temperature dependence similar to that of the wear-out failure factor, can be achieved.

As illustrated in FIG. 7, by inputting the node N21 not to an ordinary logic circuit but to the comparator CMP, an effect of more stable oscillation can be obtained. In other words, since a change of the node N21 from the low level to the high level is gradual, when being received by the logic circuit, it propagates without full amplitude of the signal and eventually could stay around the logical threshold value without full oscillations. Since the output of the comparator CMP changes greatly from the low level to the high level around its input threshold value, a ring oscillator that stably oscillates with a full amplitude can be obtained. An anti-noise feedback element ANF is inserted between the output and the input of the inverter IV22. The anti-noise feedback element ANF is an inverter formed by the PMOS transistors QP22 and QP23 and the NMOS transistors QN25 and QN26.

<Schematic Diagram of Entire Configuration of System>

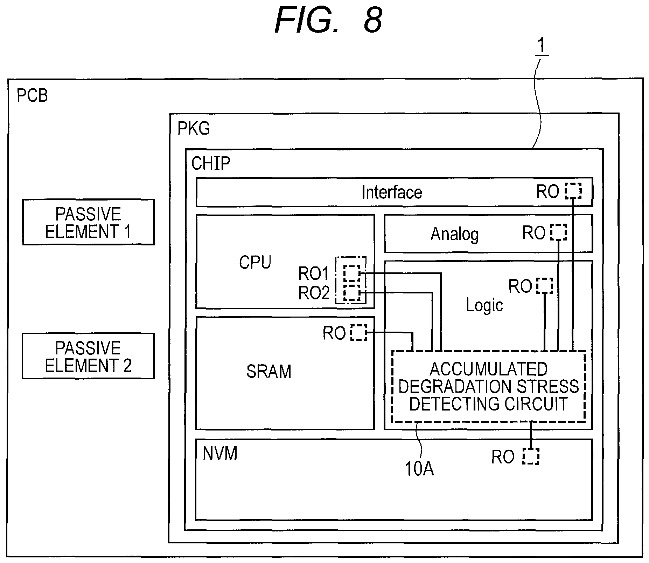

FIG. 8 is a schematic diagram of an entire configuration of a system using the semiconductor device of FIG. 1. The semiconductor device 1 is formed in a semiconductor chip CHIP. In the semiconductor chip CHIP, an interface circuit (Interface), an analog circuit (Analog), a central processing unit CPU, a static random access memory (SRAM), a logic circuit (Logic), the nonvolatile memory (flash memory) NVM, and the like are formed.

An accumulated degradation stress detecting circuit 10A includes the configuration of the accumulated degradation stress detecting circuit 10 illustrated in FIGS. 1, 4A, 4B, 5, and 6 and further includes a plurality sets of an accumulated degradation-stress-amount holding circuit, an accumulated operating-time holding circuit, a criteria holding circuit, a generating circuit, and a ring oscillator (RO).

The accumulated degradation-stress-amount holding circuits (e.g., T1 and T2) and the accumulated operating time holding circuit (e.g., TM) in the accumulated degradation stress detecting circuit 10A are formed in a logic area in which the logic circuit (Logic) is formed. The operating circuit (C12), the criteria holding circuits (J1 and J2, for example), and the generating circuits (C01 and C02, for example) in the accumulated degradation stress detecting circuit 10A may be achieved by hardware circuits in the same logic area or by software by the CPU. Alternatively, they may be achieved by an external data processing device, an external server, or the like, coupled to the semiconductor device 1. A plurality of ring oscillators (RO1, RO2, and RO) are provided in different areas, as illustrated in FIG. 8. More specifically, the ring oscillators (RO1, RO2, and RO) are provided in an area where the interface circuit (Interface) is formed, an area where the analog circuit (Analog) is formed, an area where the central processing unit CPU is formed, an area where the static random access memory (SRAM) is formed, an area where the logic circuit (Logic) is formed, and an area where the non-volatile memory NVM is formed. It is preferable to arrange the ring oscillators (RO1 and RO2) to be close to each other in the CPU forming area in which there is a concern of wear-out degradation caused by temperature increase. This arrangement can make temperature profiles of the ring oscillators (RO1 and RO2) approximately the same. Therefore, credibility of validity determination based on the correlation index explained in FIG. 3 can be increased.

The semiconductor chip CHIP is sealed in a package PKG and is mounted on a system substrate PCB. On the system substrate PCB, passive elements 1 and 2, such as a resistor element and a capacitor element, are provided.

Examples of degradation factors with regard to which prediction of wear-out failure is performed in the semiconductor device 1 illustrated in FIG. 8 are as follows.

(1) Device element reliability (e.g., TDDB or NBTI) and wiring element reliability (e.g., EM or SM) that are related to reliability of a semiconductor chip and are described in Reference Document
(2) Information retain integrity of the non-volatile memory NVM
(3) Degradation of connectivity with the semiconductor chip CHIP (e.g., wire bonding or a solder ball), degradation of an interposer, and a sealing resin that are related to reliability of the package PKG
(4) Degradation of connectivity with the package PKG (e.g., a solder ball) and degradation of the passive elements 1 and 2 in the vicinity of the semiconductor chip CHIP, which are related to reliability of the system substrate PCB

By applying the operating circuit C12A illustrated in FIG. 2 to the accumulated degradation stress detecting circuit 10A, it is possible to predict wear-out failure with regard to various types of degradation factors described above.

<Calculation Example in First Embodiment of First Example>

Next, an example of calculation of the virtual accumulated degradation stress count value (Cnt3 accumulated value) in the operating circuit C12A in FIG. 2 is described.

This is a specific method for calculating the virtual accumulated degradation stress count value (Cnt3 accumulated value) with regard to the third degradation factor having the temperature dependence Ea3 from actually measured values. The actually measured values are an accumulated value of the number of counts Cnt1 of the accumulated degradation stress count value of the first accumulated degradation-stress-amount holding circuit T1, an accumulated value of the number of counts Cnt2 of the accumulated degradation stress count value of the second accumulated degradation-stress-amount holding circuit T2, and a value N of the accumulated operating-time holding circuit TM. The temperature dependence Ea3 is different from the temperature dependences Ea1 and Ea2 and can be represented by Ea3 = q * Ea1, where a value q is a constant. The description is made below with reference to FIGS. 9A to 9F, 10A, 10B, and 11A to 11F.

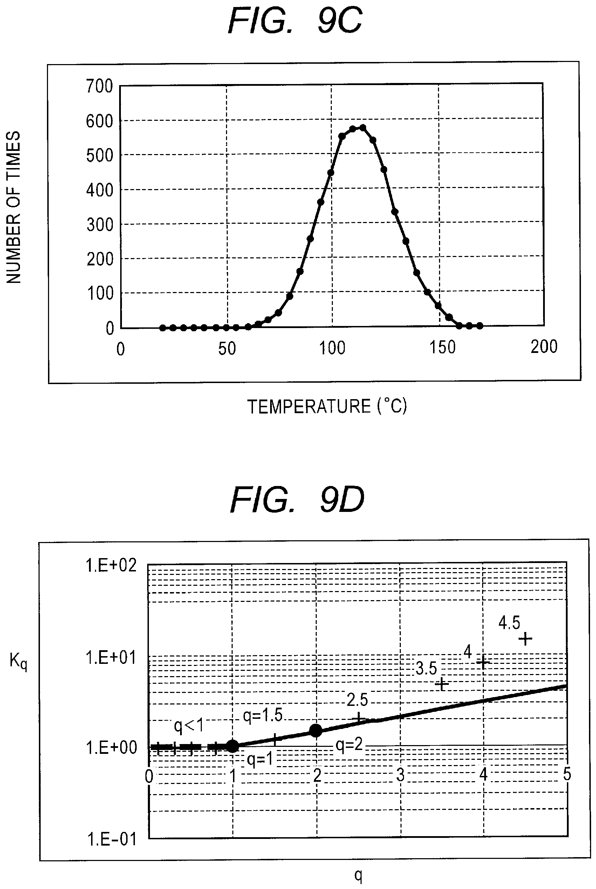

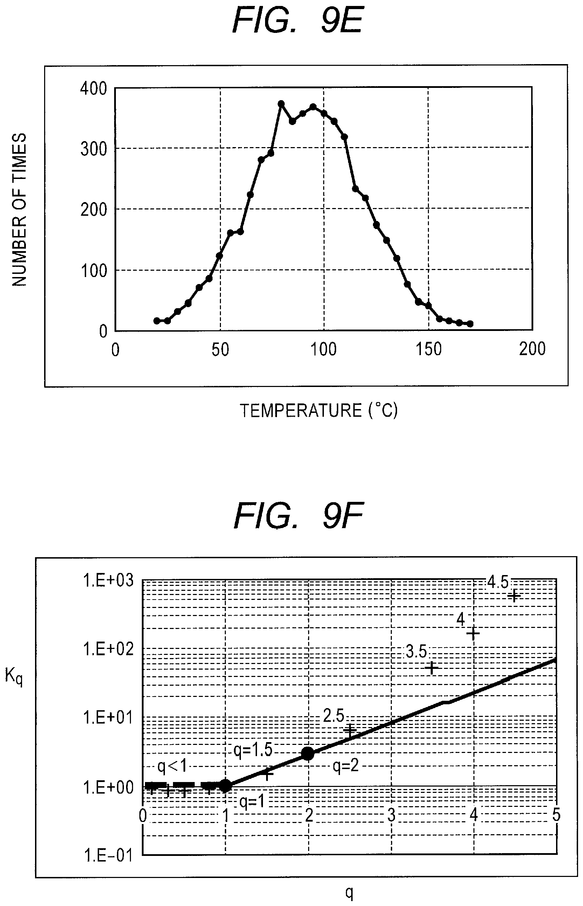

FIG. 9A illustrates the first probability distribution of a temperature of a semiconductor device for an accumulated time period. FIG. 9C illustrates the second probability distribution of the temperature of the semiconductor device for the accumulated time period. FIG. 9E illustrates the third probability distribution of the temperature of the semiconductor device for the accumulated time period. The horizontal axis represents the temperature T (°C). The vertical axis represents the number of reaching times of each temperature in a case where a period of accumulation is represented by the accumulated number of times of the unit counting operation N and N = 5000. FIG. 9B illustrates a relation between a correlation index defined by Expression (6) set forth below and a value q in FIG. 9A. FIG. 9D illustrates a relation between the correlation index and the value q in FIG. 9C. FIG. 9F illustrates a relation between the correlation index and the value q in FIG. 9E.

In FIGS. 9A to 9F, a temperature is approximately constant during a time period of one unit counting operation, the first accumulated degradation stress count value is Cnt1 = C1 * exp(-Ea1/kT), and the virtual accumulated degradation stress count value is Cnt3 = $(Cnt1)^q$ = $C1^q$ * exp(-Ea3/kT). Further, it is assumed that Ea1 = 0.5 eV and q = Ea3/Ea1. When the accumulated number of times N of the unit counting operation is 5000, a case is studied in which the temperature varies in accordance with the probability distribution of each of FIGS. 9A, 9C, and 9E in every unit counting operation. In this case, the correlation index between the Cnt1 accumulated value and the Cnt3 accumulated value is defined by Expression (6).

$$K_q = (Cnt3\ accumulated\ Value)/\{(Cnt1\ accumulated\ Value)^q/N^{q-1}\}$$

(6)

The correlation index Kq is different among the distributions of FIGS. 9A, 9C, and 9E. The correlation indices with respect to the distributions of FIGS. 9A, 9C, and 9E become simulation results of the correlation index Kq as illustrated in FIGS. 9B, 9D, and 9F, respectively. FIGS. 9B, 9D, and 9F each illustrate the correlation index Kq when the value q is from 0 to 5, and a case where the Cnt1 accumulated value for q = 1 and the Cnt2 accumulated value for q = 2 are acquired. Values of the correlation index Kq corresponding to a plurality of values of q when q < 1, 1.5, 2.5, 3.5, 4, and 4.5, are values obtained by simulation.

FIGS. 9A and 9B illustrate a case where the temperature variation is not so large during the accumulated time period, and the correlation index Kq is approximately 1. This is because, if there are N constant count values, (Cnt3 accumulated value) / $\{(Cnt1\ accumulated\ value)^q/N^{q-1}$ becomes 1. Thus, as for the correlation index $K_q$, in a case where there is no temperature variation during a time period of a counting operation, that is, there is no temperature variation for the accumulated time period, Expressions (7) and (8) are established.

$$Cnt3\ accumulated\ value = (Cnt1)^q \times accumulated\ value$$
$$= Cnt1T^q \times N \qquad (7)$$

$$(Cnt1\ accumulated\ value)^q = (Cnt1T \times N)^q = Cnt1T^q \times N^q$$

(8)

Here, Cnt1T is a value of Cnt1 when Cnt1 is the same in all unit counting operations. When Expressions (7) and (8) are substituted into Expression (6), Kq = 1 is obtained.

FIGS. 9C, 9D, 9E, and 9F illustrate cases where the temperature varies during the accumulated time period, and the correlation index Kq is 1 or more (Kq > 1). For 0 < q < 1, the correlation index Kq is approximated to Kq = 1.

Further, as illustrated in FIGS. 9E and 9F, as the temperature variation is larger during the accumulated time period, the correlation index Kq is larger. That is, it is difficult to accurately calculate the Cnt3 accumulated value from the Cnt1 accumulated value.

However, in a case where the accumulated degradation stress count value (the Cnt2 accumulated value) with regard to the second degradation factor having the temperature dependence Ea2 = q2 * Ea1, which is different from the temperature dependence Ea1, has been acquired, it is possible to estimate the correlation index Kq with high accuracy by interpolation between the correlation index $K_1$ = 1 and the correlation index $K_{q2}$ = (Cnt2 accumulated value) / $\{(Cnt1\ accumulated\ value)^{q2}/N^{q2-1}\}$, if the value q is 1 or more and q2 or less (for example, q = 1.5 for q2 = 2) . That is, it is possible to estimate the Cnt3 accumulated value with high accuracy. FIGS. 9B, 9D, and 9F each illustrate plots under assumption of $Cnt2 = (Cnt1)^{q2} = C1^{q2} * \exp(-Ea2/kT)$ (q2=2). However, because $Cnt2 = (C2/C1^{q2}) * (Cnt1)^{q2}$ is a usual form as in Expression (5), it is actually necessary to use a Cnt2_nrm accumulated value obtained by dividing the Cnt2 accumulated value by $(C2/C1^{q2})$, for calculation of the correlation index $K_{q2}$.

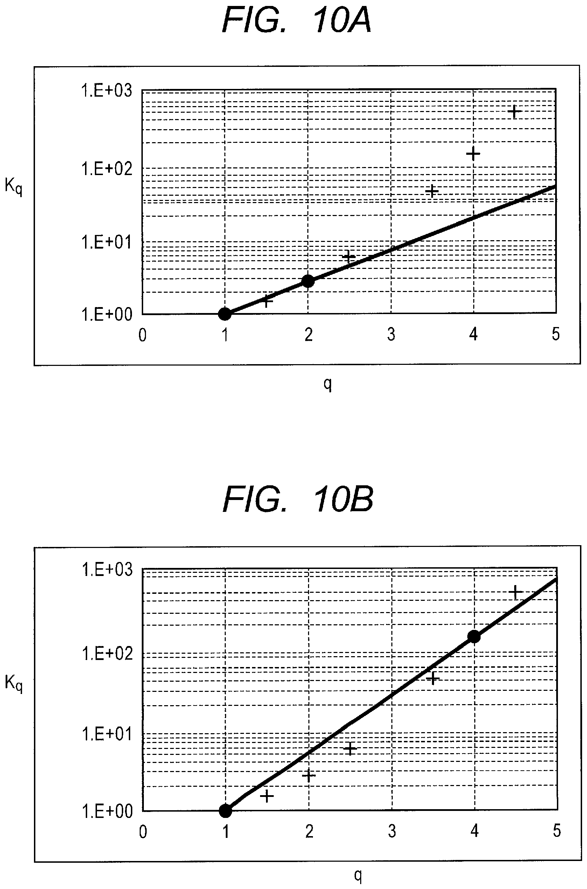

FIG. 10A is an explanatory diagram of accuracy of a correlation index. FIG. 10B is an explanatory diagram of accuracy of the correlation index when the value q2 is made larger than 2.

FIG. 10A is equivalent to FIG. 9F, and shows that the correlation index Kq can be estimated with high accuracy when the value q is between 1 and 2. When the value q is 2 or more, the accuracy is lowered. Therefore, the present invention is effective in a case where the accuracy in a region of q = 1 to 2 (Ea = 0.5 eV to 1 eV) is emphasized. Meanwhile, FIG. 10B illustrates a case where the Cnt2 accumulated value that has been acquired is regarded as a count value when the value q is 4 (q2 = 4) in FIG. 9F. In FIG. 10B, the range of the value q that can be estimated by interpolation is enlarged. When q2 of the Cnt2 accumulated value is made larger, the accuracy of the interpolation is lowered. However, an effect of enlarging the range of the value q in which the correlation index Kq can be estimated is obtained.

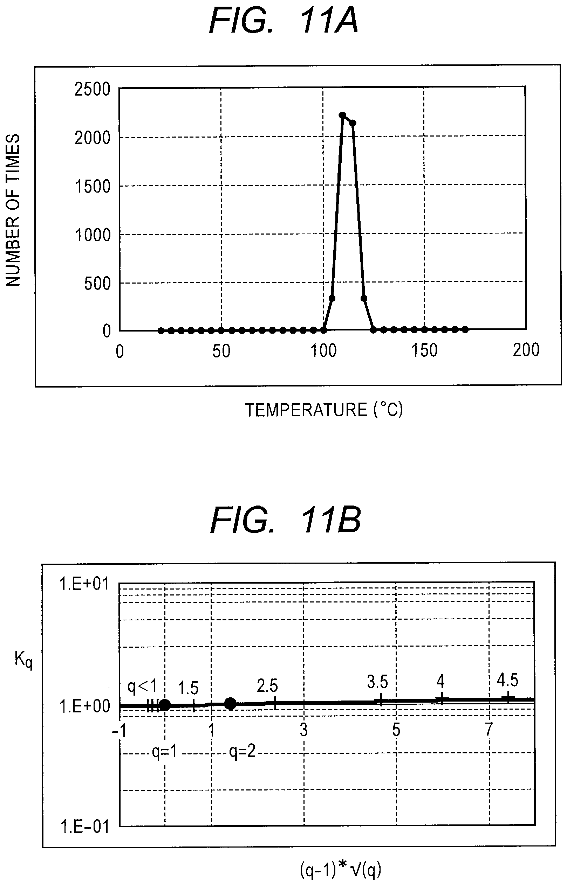

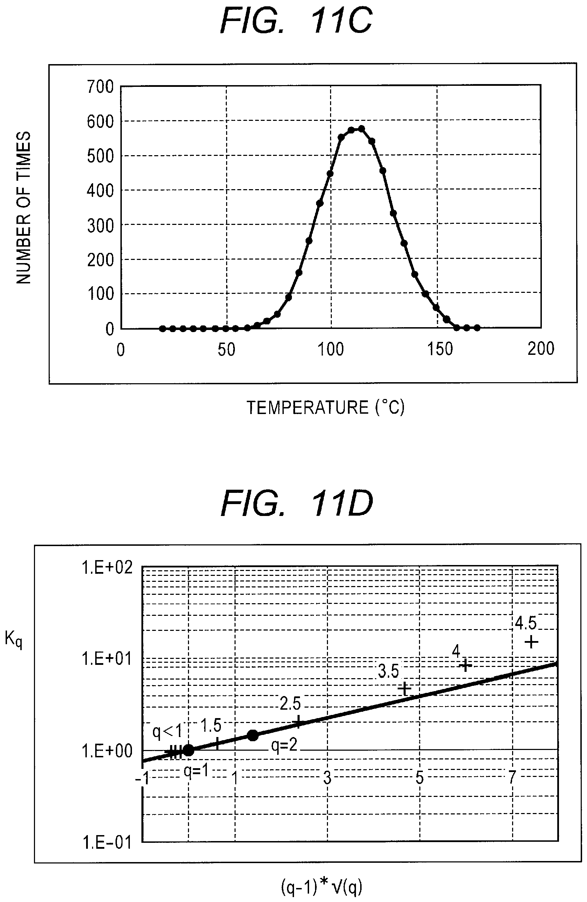

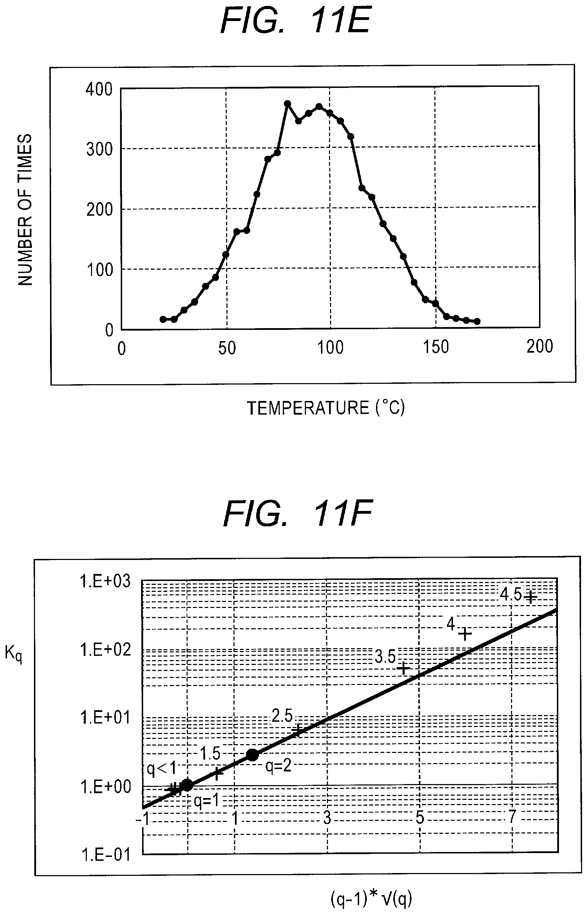

FIGS. 11A, 11C, and 11E are the same as FIGS. 9A, 9C, and 9E. FIG. 11B explains the correlation index Kq in a case where the horizontal axis in FIG. 9B represents $(q-1)*\sqrt{q}$ in place of the value q. FIG. 11D explains the correlation index Kq in a case where the horizontal axis in FIG. 9D represents $(q-1)*\sqrt{q}$ in place of the value q. FIG. 11F explains the correlation index Kq in a case where the horizontal axis in FIG. 9F represents $(q-1)*\sqrt{q}$ in place of the value q. Each of FIGS. 11B, 11D, and 11F show that, when the correlation index Kq is plotted with the horizontal axis representing $(q-1)*\sqrt{q}$, it is possible to estimate the correlation index $K_q$, that is, the virtual accumulated degradation stress count value, i.e., the Cnt3 accumulated value from two points of the Cnt1 accumulated value of the first accumulated degradation stress count value (q = 1) and the Cnt2 accumulated value of the second accumulated degradation stress count value (q = 2), not only in a region of interpolation but also in a region of extrapolation. Further, it is found from FIGS. 11B, 11D, and 11F that it is possible to estimate the virtual accumulated degradation stress count value, i.e., the Cnt3 accumulated value for a given value q with high accuracy from extrapolation between an actually measured value of the Cnt1 accumulated value for q = 1 and an actually measured value of the Cnt2 accumulated value for q = 2, also with respect to different probability distributions of temperature variation as illustrated in FIGS. 11A, 11C, and 11E.

<Implementation Flow According to First Embodiment of First Example>

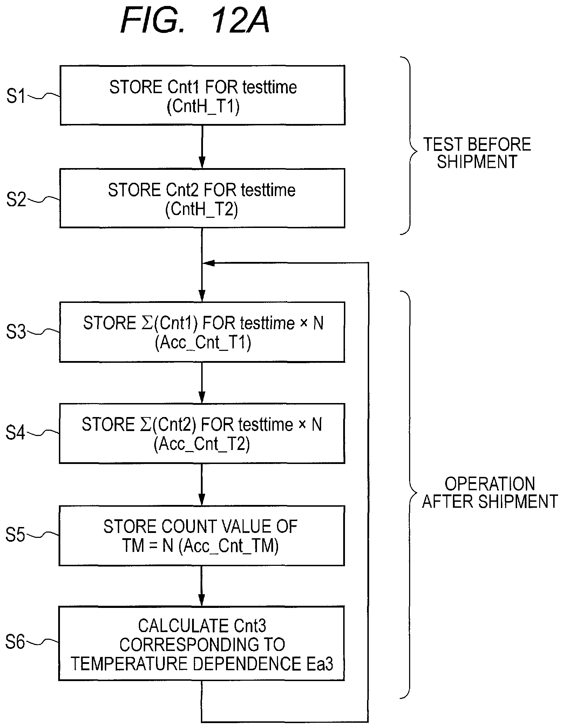

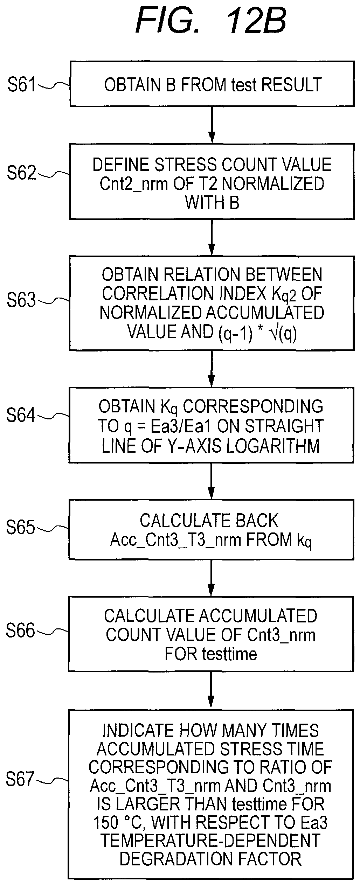

Next, an implementation flow in a case of using the operating circuit C12A illustrated in FIG. 2 is described. FIG. 12A illustrates an entire implementation flow of the first embodiment of the first example. FIG. 12B is a flowchart of a detailed calculation flow in Step S6 in FIG. 12A. First, presumption is described. In the description of FIGS. 9A to 9F, 10A, 10B, and 11A to 11F, the accumulated value of the number of counts Cnt2 of the accumulated degradation stress count value of the second accumulated degradation stress-amount holding circuit T2 is based on $Cnt2 = (Cnt1)^{q2} = C1^{q2} * \exp(-Ea2/kT)$ and q2 = Ea2/Ea1. However, the accumulated degradation stress count value of the second accumulated degradation-stress-amount holding circuit T2 designed in an actual semiconductor device 1 is represented by $Cnt2 = C2 * \exp(Ea2/kT)$, and a coefficient is different from $C1^{q2}$. A ratio B of them $= C2/C1^{q2}$ is considered in FIGS. 12A and 12B. The B value can be acquired in a test before shipment of the semiconductor device 1. In addition, a test time of the test before shipment, testtime, is used as a unit of time in place of a time of one unit counting operation. testtime is a short time period during which a temperature is approximately constant. Actually, it is suitable that testtime is set to the time of one unit counting operation. Alternatively, when a count time for testtime is intermittently performed, power consumption can be reduced. The test before shipment is performed at a temperature T of 150 °C.

Steps S1 and S2 are performed in the test before shipment of the semiconductor device 1. In Step S1, the count value Cnt1 of the first accumulated degradation-stress-amount holding circuit T1 for testtime at 150 °C is acquired and stored as CntH_T1. In Step S2, the count value Cnt2 of the second accumulated degradation-stress-amount holding circuit T2 for testtime at 150 °C is acquired and stored as CntH_T2.

Steps S3 to S6 are performed during an operation of the semiconductor device 1 after shipment of the semiconductor device 1. In Step S3, the accumulated value of the accumulated degradation stress count value Cnt1 of the first accumulated degradation-stress-amount holding circuit T1 for testtime × N is acquired and stored as Acc_Cnt_T1. In Step S4, the accumulated value of the accumulated degradation stress count value Cnt2 of the second accumulated degradation-stress-amount holding circuit T2 for testtime × N is acquired and stored as Acc_Cnt_T2. In Step S5, a count value N of the accumulated number of times of a unit operation of the accumulated operating-time holding circuit TM is acquired and stored as Acc_Cnt_TM. In Step S6, an accumulated value of a virtual accumulated degradation stress count value Cnt3 corresponding to the temperature dependence Ea3 is calculated. It is not necessary to perform Step S6 every time.

The detailed calculation flow in Step S6 is illustrated in FIG. 12B.

In Step S61, the ratio B is obtained from a result of test. The ratio B is obtained as follows: $B = (CntH\_T2) / (CntH\_T1)^{q2} = C2/C1^{q2}$. Here, $Cnt1 = C1 * \exp(-Ea1/kT)$, $Cnt2 = C2 * \exp(-Ea2/kT) = C2 * \{\exp(-Ea1/kT)\}^{q2}$, and q2 = Ea2/Ea1 are established.

In Step S62, a normalized accumulated degradation stress count value Cnt2_nrm of the second accumulated degradation-stress-amount holding circuit T2 is defined and obtained. Because Cnt2_nrm = $C1^{q2}$ * exp(-Ea2/kT) = $(Cnt1)^{q2}$ and Cnt2_nrm = Cnt2/B are established, normalized Acc_Cnt_T2_nrm is represented by Acc_Cnt_T2_nrm = Cnt2_nrm accumulated value = Acc_Cnt_T2/B.

In Step S63, a point having a correlation index $K_{q2}$ for the normalized Acc_Cnt_T2_nrm as a Y-coordinate value and $(q-1)*\sqrt{q}$ as an X-coordinate value is connected to (0, 1) by a straight line. The Y-axis is a logarithm axis. That is, the relation between the correlation index $K_{q2}$ and $(q-1)*\sqrt{q}$ in FIGS. 11B, 11D, and 11F is obtained. The correlation index $K_{q2}$ is represented by $K_{q2}$ = (Acc_Cnt_T2_nrm) / $\{(Acc\_Cnt\_T1)^{q2}/N^{q2-1}\}$.

In Step S64, a correlation index Kq corresponding to q = Ea3/Ea1 on the straight line obtained in Step S63. The correlation index Kq is represented by Kq = (Acc_Cnt_T3_nrm) / $\{(Acc\_Cnt\_T1)^{q}/N^{q-1}\}$. Further, normalized Acc_Cnt_T3_nrm is represented by Acc_Cnt_T3_nrm = Cnt3_nrm accumulated value. Cnt3_nrm is the virtual accumulated degradation stress count value corresponding to the temperature dependence Ea3, $C1^{q}$ * exp(-Ea3/kT) = $(Cnt1)^{q}$.

In Step S65, Acc_Cnt_T3_nrm is calculated back from the correlation index Kq obtained in Step S64, Acc_Cnt_T1, and N.

In Step S66, a virtual accumulated degradation stress count value CntH_T3_nrm at 150 °C for testtime is calculated for Cnt3_nrm defined in Step S64. CntH_T3_nrm is represented by CntH_T3_nrm = $(CntH\_T1)^{q}$.

In Step S67, a ratio of obtained Acc_Cnt_T3_nrm to CntH_T3_nrm indicates the accumulated degradation stress time that has reached at the moment with regard to the degradation factor having the temperature dependence Ea3, with the testtime at 150 °C as the unit.

According to FIGS. 12A and 12B, it is possible to estimate the virtual accumulated stress count value (Cnt3 accumulated value) with regard to the third degradation factor having the temperature dependence Ea3 from the accumulated degradation stress count value (Cnt1 accumulated value) with regard to the first degradation factor having the temperature dependence Ea1, the accumulated degradation stress count value (Cnt2 accumulated value) with regard to the second degradation factor having the temperature dependence Ea2, and the accumulated number of times N of the unit counting operation. That is, the semiconductor device 1 that can predict wear-out failure with high accuracy with regard to various types of degradation factors described in FIG. 8 can be obtained. Although FIGS. 12A and 12B illustrate a flow example for predicting wear-out failure with regard to the third degradation factor corresponding to FIGS. 11A to 11F, Kq in Step S64 may be acquired from actual measurement of the Cnt1 accumulated value and the Cnt2 accumulated value in another plot, such as FIGS. 9A to 9F.

<Specific Description of Second Embodiment of First Example>

The validity determining circuit AJ1 illustrated in FIG. 3 is more specifically described.

A correlation that should exist between an accumulated value (an accumulated degradation stress count value) Cnt1 accumulated value of the first accumulated degradation-stress-amount holding circuit T1 and an accumulated value (an accumulated degradation stress count value) Cnt2 accumulated value of the second accumulated degradation-stress-amount holding circuit T2 is described below. A count value acquired in a time period of unit counting operation "i" is as follows, assuming that the time period is short and a temperature T is approximately constant.

$$Cnt1[i] = C1 * exp(-Ea1/kT)$$

$$Cnt2[i] = C2 * exp(-Ea2/kT) = C2 * exp(-q2*Ea1/kT) =$$

$$(C2/C1^{q2})*(Cnt1[i])^{q2},$$

where q2 = Ea2 / Ea1.

In the simplest case in which the temperature T is constant over a time period of N times of count accumulation, Cnt1[i] has the same value Cnt1T irrespective of "i".

$$\Sigma Cnt1[i] = Cnt1T \times N$$

$$\Sigma Cnt2[i] = (C2/C1^{q2}) * (Cnt1[i])^{q2} = (C2/C1^{q2}) * (Cnt1T \times N)^{q2}.$$

At this time, the same correlation index $K_{q2}$ as that defined in the first embodiment of the first example is as follows.

$$K_{q2} = (Cnt2\ accumulated\ value)/\{(Cnt1\ accumulated\ value)^{q2}/N^{q2-1}\}$$

$$= (C2/C1^{q2})$$

In the first embodiment of the first example, the coefficient C3 of the virtual accumulated degradation stress count value Cnt3 is defined as $C1^q$. Therefore, if there is no temperature variation, Kq = 1 . In the second embodiment of the first example, Cnt2 is an actually measured value of another accumulated degradation stress counter having the temperature dependence Ea2, and has an independent coefficient C2. As a result, if the temperature T is constant, $K_{q2}$ = $(C2/C1^{q2})$.

In a normal case where the temperature T varies over the accumulated period corresponding to N counts, relations $K_{q2} = A_{q2} * (C2/C1^{q2})$ and $(A_{q2} > 1)$ are established, as is found from the results illustrated in FIGS. 9A to 9F, 10A, 10B, and 11A to 11F. Thus, as a temperature variation is larger, $A_{q2}$ becomes larger. Please note that because an example where $C2/C1^{q2} = 1$ is illustrated in FIGS. 9A to 9F, 10A, 10B, and 11A to 11F, $K_{q2}$ represented by the vertical axis of these graphs is equal to $A_{q2}$. It can be understood that as the temperature variation is larger, $A_{q2}$ is larger, from a simple expression by referring to a case of q2 = 2 as an example. When it is assumed that x is a given variable and m is an average of x, the following relation is established.

$$<x^2> = m^2 + <(x - m)^2>$$

Here, < > represent averaging of a value surrounded therebetween.

When this general expression is applied to the case of the second embodiment of the first example, the following relations are obtained.

$$Cnt1\ accumulated\ value = m * N$$

$$Cnt2\ accumulated\ value = (C2/C1^2) *\ (accumulated\ value\ of\ square$$

$$of\ Cnt1) = (C2/C1^{q2}) * <x^2> * N$$

Therefore, a correlation index $K_2$ is obtained as follows.

$$K_2 = (Cnt2\ accumulated\ value)/\{(Cnt1\ accumulated\ value)^2/N\}$$

$$= (C2/C1^2) * <x^2>/m^2$$

$$= (C2/C1^2) * (1 + <(x - m)^2>/m^2)$$

Here, $<(x - m)^2>/m^2 > 0$. That is, in a case where the temperature T varies during the count accumulated time period, the correlation index $K_2$ is larger than $(C2/C1^2)$ as the variation of the temperature T is larger. In other words, a constant $A_2$ is larger than 1.

Returning to FIGS. 9A to 9F, the correlation index $K_2$ (Kq for q = 2) is about 1.0 in FIG 9B, about 1.5 in FIG. 9D, and about 2.7 in FIG. 9F, for example. When a temperature profile that the semiconductor device 1 experiences realistically is considered, an analysis result that the correlation index $K_2$ does not exceed 4 at the maximum has been obtained. FIGS. 9A to 9F illustrate a case where normalization is performed to achieve $C2/C1^2 = 1$, and it can be determined that both Cnt1 accumulated value and Cnt2 accumulated value are appropriate when $K_2$ is equal to $A_2$ and is in the following range.

$$(C2/C1^2) \leq K_2 \leq A_2*(C2/C1^2)\ and\ A_2 = 4$$

Here, a case of q2 = 2 is described. Also in a case where q2 is other than 2, a range within which the correlation index $K_{q2}$ calculated by the Cnt1 accumulated value, the Cnt2 accumulated value, and the accumulated number of times N of the unit counting operation, should fall can be defined in a similar manner as follows.

$$(C2/C1^{q2}) \leq K_{q2} \leq A_{q2} * (C2/C1^{q2})$$

Here, $A_{q2}$ is a constant that can be determined in advance with respect to q2 = Ea2/Ea1 based on a state where the temperature varies the most in an expected temperature profile for a semiconductor device.

<Implementation Flow According to Second Embodiment of First Example>

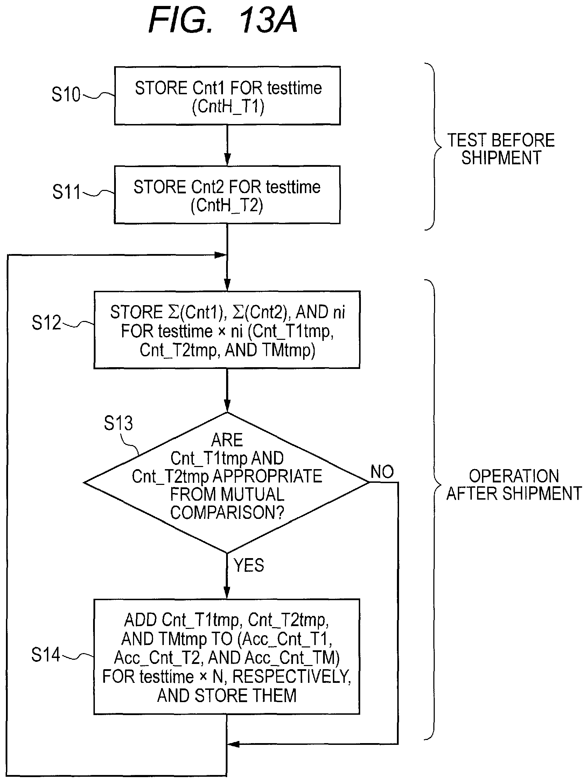

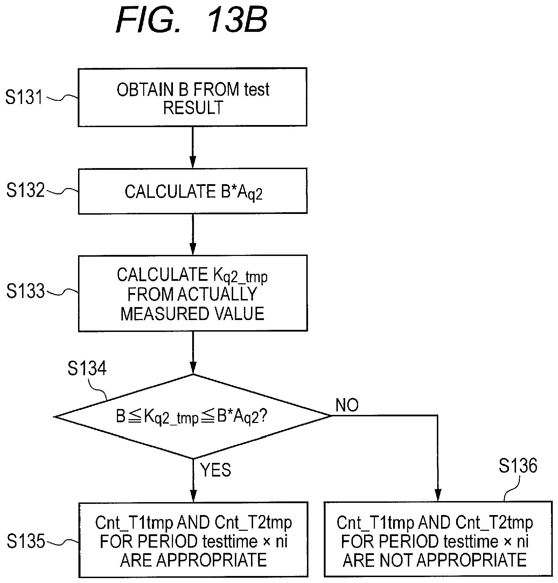

Next, an implementation flow in a case of using the operating circuit C12B illustrated in FIG. 3 is described. FIG. 13A illustrates an entire flow of the second embodiment of the first example. FIG. 13B is a flowchart of a detailed determination flow in Step S13 in FIG. 13A. First, presumption is described. A test time of a test before shipment, testtime, is used as a unit of time in place of a time for one unit counting operation. testtime is a short time period during which a temperature is approximately constant. The test before shipment is performed at a temperature T of 150 °C.

Steps S10 and S11 are performed in the test before shipment of the semiconductor device 1. In Step S10, the count value Cnt1 of the first accumulated degradation-stress-amount holding circuit T1 for testtime at 150 °C is acquired and stored as CntH_T1. In Step S11, the accumulated degradation stress count value Cnt2 of the second accumulated degradation-stress-amount holding circuit T2 for testtime at 150 °C is acquired and stored as CntH_T2.

Steps S12 to S14 are performed during an operation of the semiconductor device 1 after shipment of the semiconductor device 1.

In Step S12, the accumulated degradation stress count value (Cnt1 accumulated value) of the first accumulated degradation-stress-amount holding circuit T1 and the accumulated degradation stress count value (Cnt2 accumulated value) of the second accumulated degradation-stress-amount holding circuit T2 for a predetermined time period testtime $\times$ ni are acquired and stored as Cnt_T1tmp and Cnt_T2tmp. In addition, the accumulated number of times ni of the unit counting operation of the accumulated operating-time holding circuit TM is acquired and stored as TMtmp.

In Step S13, it is determined from mutual comparing determination whether Cnt_T1tmp and Cnt_T2tmp acquired in Step S12 are appropriate. In a case where they are appropriate (YES), the process goes to Step S14. In a case where they are not appropriate (NO), Cnt_T1tmp, Cnt_T2tmp, and TMtmp are discarded, and the process goes to Step S12.

In Step S14, Cnt_T1tmp, Cnt_T2tmp, and TMtmp acquired in Step S12 are added to the accumulated degradation stress count value Acc_Cnt_T1, the accumulated degradation stress count value Acc_Cnt_T2, and the accumulated number of times Acc_Cnt_TM for a lifetime period testtime $\times$ N, respectively, and are stored. The accumulated degradation stress count value Acc_Cnt_T1 is the accumulated degradation stress count value of the first accumulated degradation-stress-amount holding circuit T1. The accumulated degradation stress count value Acc_Cnt_T2 is the accumulated degradation stress count value of the second accumulated degradation-stress-amount holding circuit T2. The accumulated number of times Acc_Cnt_TM is the accumulated number of times of the unit counting operation of the accumulated operating-time holding circuit TM. Then, the process goes to Step S12. Here, N = Σni.

The detailed determination flow in Step S13 is illustrated in FIG. 13B.

In Step S131, the ratio B is obtained from the result of test. The ratio B is obtained as follows: B = (CntH_T2)/(CntH_T1)$^{q2}$ = C2/C1$^{q2}$. Also, Cnt1 = C1 * exp(-Ea1/kT), Cnt2 = C2 * exp(-Ea2/kT) = C2 * {exp(-Ea1/kT)}$^{q2}$, and q2 = Ea2/Ea1 are established.

In Step S132, B*$A_{q2}$ is calculated, considering a worst value that takes time variation of the temperature T into consideration. Here, $A_{q2}$ is the worst value considering the time variation of the temperature T, and is a preset known value. The details are as described in "Specific Description of Second Embodiment of First Example".

In Step S133, a correlation index $K_{q2\_tmp}$ is calculated from an actually measured value. The correlation index $K_{q2\_tmp}$ is obtained as follows:

$$K_{q2\_tmp} = Cnt\_T2tmp/\{(Cnt\_T1tmp)^{q2}/(TMtmp)^{q2-1}\}$$

In Step S134, it is determined whether the correlation index $K_{q2\_tmp}$ is in the following range.

$$B \leq K_{q2\_tmp} \leq B*A_{q2}$$

If the correlation index $K_{q2\_tmp}$ is in that range, it is determined that Cnt_T1tmp and Cnt_T2tmp acquired in Step S12 are appropriate (YES) (Step S135). Otherwise, it is determined that Cnt_T1tmp and Cnt_T2tmp are not appropriate (NO) (Step S136).

In FIGS. 13A and 13B, as for the accumulated degradation stress count values acquired in the predetermined time period testtime × ni, validity determination is performed for values thereof. A correlation index may be calculated for the accumulated counts Acc_Cnt_T1 and Acc_Cnt_T2 for the accumulated time period testtime × N, and validity determination for the count values maybe performed. If it is determined that the count values are not appropriate, the count values are returned to Acc_Cnt_T1, Acc_Cnt_T2, Acc_Cnt_TM acquired in a cycle one cycle before. For example, if validity determination is performed before writing the latest values of Acc_Cnt_T1, Acc_Cnt_T2, and Acc_Cnt_TM into a storage area of the non-volatile memory NVM, old values in the cycle one cycle before remain in the storage area of the non-volatile memory NVM. Therefore, it suffices that the latest values are discarded and the values remaining in the storage area of the non-volatile memory NVM are set as latest values that are reliable. Because accumulation of the accumulated stress count value is performed for a long term of the order of years, an error in evaluation of wear-out failure is small even if abnormal values for one cycle are discarded. Here, one cycle means a time period from reset of the semiconductor device 1 of the present disclosure to next reset, for example. Alternatively, one cycle means a time period from turning-on of the semiconductor device 1 of the present disclosure to turning-off.

The validity determination for the accumulated stress count values may be performed by verifying that the correlation index $Kq_2 = (Acc\_Cnt\_T2)/\{(Acc\_Cnt\_T1)^{q2}/N^{q2-1}\}$ is equal to or larger than B and is equal to or smaller than $B*Aq_2$ at a time when either of Acc_Cnt_T1 and Acc_Cnt_T2 reaches its wear-out failure criteria. N is Acc_Cnt_TM. When the validity is verified, it is possible to recognize that risk of wear-out failure is increasing with confidence.

According to the implementation flow in the second embodiment of the first example, it is determined whether a relation between accumulated stress count values corresponding to degradation factors having different temperature dependences is appropriate, by using the fact that two or more values of those accumulated stress count values are actually measured. In this manner, it is possible to obtain a semiconductor device that can increase credibility of the accumulated stress count values and can predict wear-out failure with high reliability.

Second Example

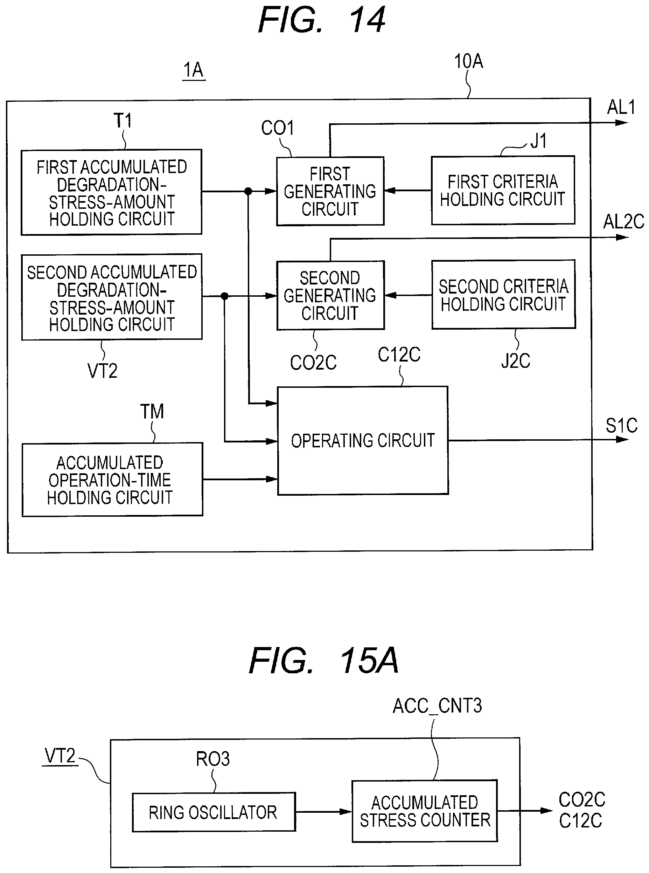

FIG. 14 is an explanatory diagram of a semiconductor device according to a second example. A semiconductor device 1A is obtained by partly modifying the accumulated degradation stress detecting circuit 10 illustrated in FIG. 1. Therefore, a different portion is mainly described below. The accumulated degradation stress detecting circuit 10 in FIG. 1 includes the second accumulated degradation-stress-amount holding circuit T2, the second criteria holding circuit J2, and the second generating circuit C02, and the operating circuit C12. An accumulated degradation stress detecting circuit 10A in FIG. 14 includes a circuit for holding a second accumulated degradation stress count value (a second accumulated degradation-stress-amount holding circuit) VT2 and a circuit for holding a count value of a second criteria (determination standard) (a second criteria holding circuit) J2C. The accumulated degradation stress detecting circuit 10A further includes a circuit for generating an accumulated stress alarm signal AL2C (a second generating circuit C02C and an operating circuit C12C.

The second accumulated degradation-stress-amount holding circuit VT2 is provided for evaluation of the degree of wear-out failure with regard to a second degradation factor (wear-out failure factor) having the temperature dependence Ea2 and a voltage dependence f(V). The second accumulated degradation stress count value Cnt2 is represented by $Cnt2 \propto f(V) * C2 * exp(-Ea2/kT)$. C2 is a constant related to a temperature dependence of the number of counts. The second accumulated degradation-stress-amount holding circuit VT2 can be used as an accumulated degradation stress counter for a degradation factor having large sensitivity not only to a temperature but also a voltage, for example, TDDB. The voltage V is a potential difference between a power-source voltage (Vd) supplied to the semiconductor device 1A and a ground potential (Vs).

The second criteria holding circuit J2C holds a criteria with regard to the second degradation factor (wear-out failure factor) having the temperature dependence Ea2 and the voltage dependence f(V), The second generating circuit C02 generates the accumulated stress alarm signal AL2C when the second accumulated degradation stress count value (Cnt2 accumulated value) of the second accumulated degradation-stress-amount holding circuit VT2 reaches the second criteria (determination standard) held by the second criteria holding circuit J2C.

The operating circuit C12C performs desired calculation based on the accumulated degradation stress count values (Cnt1 accumulated value and Cnt2 accumulated value) of the first and second accumulated degradation-stress-amount holding circuits T1 and VT2 and the count value N of the accumulated operating time of the accumulated operating-time holding circuit TM, thereby generating a signal S1C as a calculation result.

The temperature dependence Ea2 may not be necessarily different from the temperature dependence Ea1. There is a possibility that the first degradation factor having small voltage sensitivity and the second degradation factor having larger voltage sensitivity are approximately equal to each other in temperature dependence Ea by chance.

FIG. 15A illustrates a configuration example of the second accumulated degradation-stress-amount holding circuit VT2. The second accumulated degradation-stress-amount holding circuit VT2 includes a ring oscillator RO3 and an accumulated stress counter ACC_CNT3. Oscillation of the ring oscillator RO3 having frequency characteristics in proportion to the temperature dependence Ea2 and the voltage dependence f (V) is counted by the accumulated stress counter ACC_CNT3. The oscillation frequency of the ring oscillator RO3 is an oscillation count per second. An output of the accumulated stress counter ACC_CNT3 is coupled to inputs of the second generating circuit C02C and the operating circuit C12C.

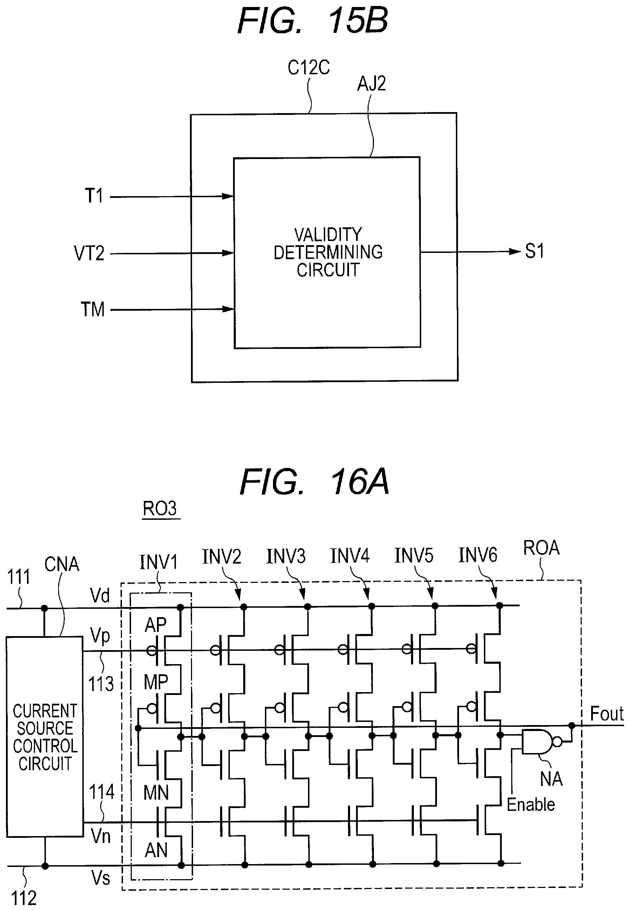

FIG. 15B illustrates a configuration example of the operating circuit C12C. The operating circuit C12C includes a validity determining circuit AJ2. This validity determining circuit AJ2 calculates a correlation index $K_{q2}$ between the Cnt1 accumulated value that is the accumulated value (the accumulated degradation stress count value) of the first accumulated degradation-stress-amount holding circuit T1 and the Cnt2 accumulated value that is the accumulated value (the accumulated degradation stress count value) of the second accumulated degradation-stress-amount holding circuit VT2. The correlation index $K_{q2}$ is calculated on the basis of the Cnt1 accumulated value of the first accumulated degradation-stress-amount holding circuit T1, the Cnt2 accumulated value of the second accumulated degradation-stress-amount holding circuit VT2, and an actually measured value of the value N of the accumulated operating-time holding circuit TM.

The correlation index $K_{q2}$ between Cnt1 accumulated value and the Cnt2 accumulated value is the same as that in the description of FIG. 3. The number of counts Cnt2 for a predetermined period in which the temperature T and the voltage V can be regarded as being approximately constant is represented by Cnt2 = f(V)*C2*exp(-Ea2/kT), and the following relation is established.

$$K_{q2} = (\text{Cnt2 accumulated value})/\{(\text{Cnt1 accumulated value})^{q2} / N^{q2-1}\}$$

Here, Cnt2 accumulated value and Cnt1 accumulated value are actually measured values, and q2 = Ea2/Ea1.

A determination standard for validity of the correlation index $K_{q2}$ corresponds to what is obtained by replacing C2 in FIG. 3 with f (V) *C2. Further, the voltage V varies. In a case where a variation range of the voltage V is from Vchipmin to Vchipmax, Expression (4) in FIG. 3 becomes Expression (9) in the second example.

$$f(\text{Vchipmin}) * (C2/C1^{q2}) \le K_{q2} \le f(\text{Vchipmax}) * A_{q2} * (C2/C1^{q2}) \quad (9)$$

For example, when q2 = 2, A2 = 4.

FIG. 16A is a circuit diagram illustrating a configuration of the ring oscillator in FIG. 15A. In this configuration example having the frequency characteristics in proportion to the temperature dependence Ea2 and the voltage dependence f(V), the ring oscillator RO3 oscillates when a loop path formed by six inverters INV1 to INV6 driven by a current source and one NAND gate NA, makes a signal (enable) applied to one input terminal of the NAND gate NA High. Each of the inverters INV1 to INV6 driven by the current source includes a current-source PMOS transistor AP, a current-source NMOS transistor AN, a PMOS transistor MP, and an NMOS transistor MN. A source of the current-source PMOS transistor AP is coupled to a power line 111 to which the power-source potential (Vd) is supplied, and a source of the current-source NMOS transistor AN is coupled to a reference line 112 to which a reference potential (Vs) is supplied. When Vs = 0 V, a potential difference (voltage) between the power line 111 and the reference line is Vd. Hereinafter, in a case of representing as voltage, it means a potential difference from the potential (Vs = 0 V) of the reference line 112. In the inverters INV1 to INV6 driven by the current source, when the next stage is driven from Low to High, a signal transition time is determined in proportion to a driving current of the current-source PMOS transistor AP. When the next stage is driven from High to Low, the signal transition time is determined in proportion to the driving current of the current-source NMOS transistor AN. The PMOS transistor MP and the NMOS transistor MN having a gate in common, sandwiched between the current-source PMOS transistor AP and the current-source NMOS transistor AN, serve as a switch for selecting either the current-source PMOS transistor AP or the current-source NMOS transistor AN depending on the oscillation transient state. A gate voltage (Vp) of the current-source PMOS transistor AP and a gate voltage (Vn) of the current-source NMOS transistor AN are each controlled by a current-source control circuit CNA in such a manner that the oscillation frequency of an output Fout depends on the temperature T and the voltage V.

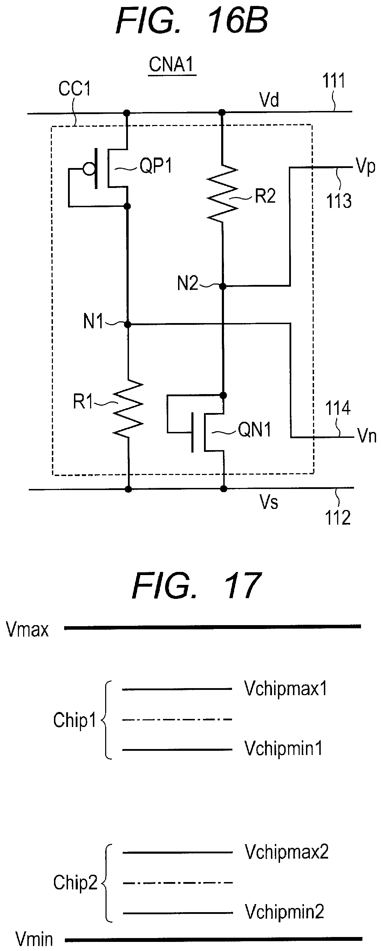

FIG. 16B illustrates a configuration example of the current-source control circuit in FIG. 16A. As shown in FIG. 16B, a current-source control circuit CNA1 includes a voltage generating circuit CC1. The voltage generating circuit CC1 includes a diode-connected PMOS transistor QP1 with its source coupled to the power line 111 and a resistance R1 coupled between a drain (node N1) of the PMOS transistor QP1 and the reference line 112. The voltage generating circuit CC1 also includes a diode-connected NMOS transistor QN1 with its source coupled to the reference line 112 and a resistance R2 coupled between a drain (node N2) of the NMOS transistor QN1 and the power line 111. The node N1 is coupled to an output line 114 and the current-source control circuit CNA1 supplies the gate voltage (Vn) to the gate of the current-source NMOS transistor AN. The node N2 is coupled to an output line 113, and the current-source control circuit CNA1 supplies the gate voltage (Vp) to the gate of the current-source PMOS transistor AP.

FIG. 17 is an explanatory diagram of a range of voltage variation of a semiconductor device. FIG. 17 illustrates a relation between a voltage range from Vmin to Vmax that is between the minimum voltage Vmin and the maximum voltage Vmax of the power-source voltage (Vd) in the product specification of the semiconductor device 1A and a variation range from Vchipmin to Vchipmax that is between the minimum value Vchipmin and the maximum value Vchipmax of variation of the power-source voltage (Vd) in every semiconductor device 1A. The voltage range from Vmin to Vmax is wider than the variation range from Vchipmin to Vchipmax, because the voltage range from Vmin to Vmax includes offset variation caused by an average voltage value that is different between the semiconductor devices 1A in addition to the variation range from Vchipmin to Vchipmax. The offset variation is caused by a characteristic difference between power control semiconductor devices in systems in each of which the semiconductor device 1A is mounted, for example. As a result of this, a certain semiconductor device 1A (Chip1) has a variation range from Vchipmin1 to Vchipmax1 and another semiconductor device 1A (Chip2) has a variation range from Vchipmin2 to Vchipmax2, for example. In this manner, the variation range is different between the semiconductor devices 1A. However, a ratio Vchipmax1/Vchipmin1 and a ratio Vchipmax2/Vchipmin2, each representing the width of variation, are approximately equal to each other.

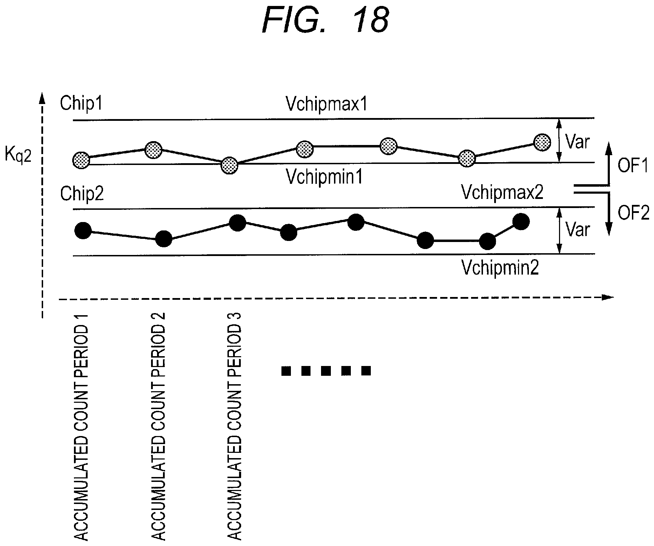

FIG. 18 is an explanatory diagram of a variation of a correlation index. FIG. 18 schematically illustrates how the correlation index $K_{q2}$ varies in each accumulated time period in terms of a relation between the certain semiconductor device 1A (Chip1) and the other semiconductor device 1A (Chip2). This diagram illustrates an expected variation range of the correlation index $K_{q2}$ when both the number of counts (Cnt1 accumulated value) of the first accumulated degradation-stress-amount holding circuit T1 and the number of counts (Cnt2 accumulated value) of the second accumulated degradation-stress-amount holding circuit VT2 are normal. One accumulated count time period is from turning-on of the power-source voltage of the semiconductor device 1A to turning-off, for example. Because of Vchipmin and Vchipmax of each semiconductor device 1A (Chip1 or Chip2), the correlation index $K_{q2}$ exhibits an offset (OF1 or OF2) for each semiconductor device 1A (Chip1 or Chip2). However, the variation width of correlation index $K_{q2}$ of each semiconductor device 1A has approximately the same variation width Var irrespective of the semiconductor devices 1A (Chip1 and Chip2) as described below, when being evaluated based on a ratio max/min that is a ratio of the maximum value max and the minimum value min of the correlation index $K_{q2}$. For example, in a case where $f(V) = V^n$, the following relation is established. $V^n$ represents the n-th power of V.

$$K_{q2\_tmp\_max}/K_{q2\_tmp\_min} < A_{q2} * \{f(Vchipmax)/f(Vchipmin)\}$$

$$= A_{q2} * (Vchipmax / Vchipmin)^n$$

<Implementation Flow of Second Example>

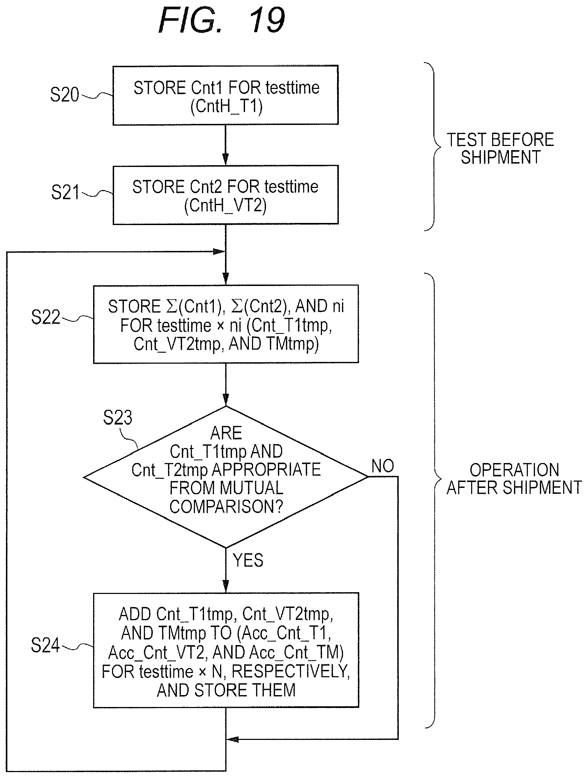

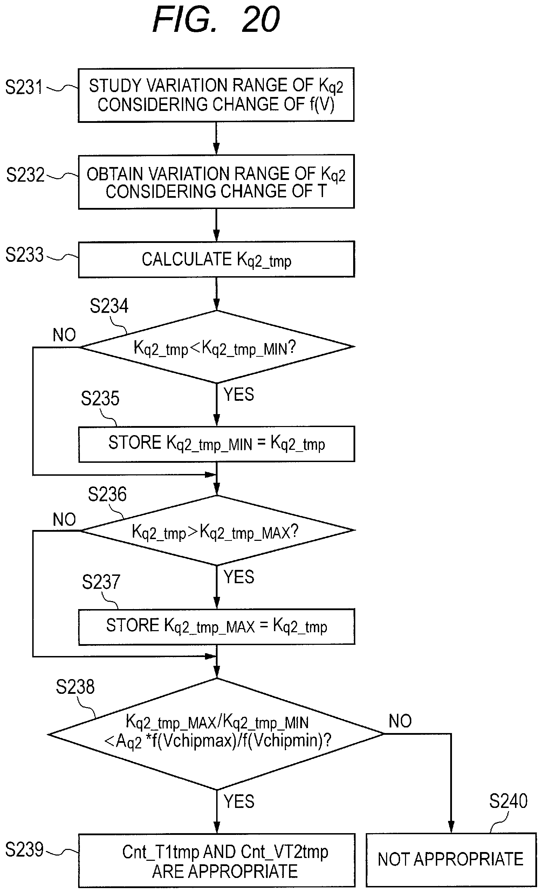

FIG. 19 illustrates an entire implementation flow of the second example. FIG. 20 is a flowchart of a detailed determination flow in Step S23 in FIG. 19. The flow in FIGS. 19 and 20 tracks a $K_{q2}$ history in each accumulated time period for every chip and verifies that the variation width (a ratio of the maximum value to the minimum value) falls within f(Vchipmax/Vchipmin) × $A_{q2}$, thereby confirming that both the number of counts of the first and second accumulated degradation-stress-amount holding circuits T1 and VT2 are appropriate. First, presumption is described. A test time of a test before shipment, testtime, is used as a unit of time in place of a time for one unit counting operation. testtime is a short time period during which a temperature and a voltage are approximately constant. The test before shipment is performed at a temperature T of 150 °C.

In Step S20, the count value Cnt1 of the first accumulated degradation-stress-amount holding circuit T1 for testtime at 150 °C is acquired and stored as CntH_T1.

In Step S21, the count value Cnt2 of the second accumulated degradation-stress-amount holding circuit VT2 for testtime at 150 °C is acquired and stored as CntH_VT2.

In Step S22, the accumulated degradation stress count values for a predetermined time period of testtime × ni (Cnt1 accumulated value and Cnt2 accumulated value) of the first and second accumulated degradation-stress-amount holding circuit T1 and VT2 are acquired and stored as Cnt_T1tmp and Cnt_VT2tmp. In addition, the accumulated number of times ni of the unit counting operation of the accumulated operating-time holding circuit TM for this time period is acquired and stored as TMtmp.

In Step S23, it is determined from mutual comparing determination whether Cnt_T1tmp and Cnt_VT2tmp acquired in Step S22 are appropriate. In a case where they are appropriate (YES), the process goes to Step S24. In a case where they are not appropriate (NO), Cnt_T1tmp, Cnt_VT2tmp, and TMtmp are discarded, and the process goes to Step S22.

In Step S24, Cnt_T1tmp, Cnt_VT2tmp, and TMtmp acquired in Step S22 are added to the accumulated degradation stress count value Acc_Cnt_T1, the accumulated degradation stress count value Acc_Cnt_VT2, and the accumulated number of times Acc_Cnt_TM for a past lifetime period testtime $\times$ N, respectively, and are stored. The accumulated degradation stress count value Acc_Cnt_T1 is the accumulated degradation stress count value of the first accumulated degradation-stress-amount holding circuit T1. The accumulated degradation stress count value Acc_Cnt_VT2 is the accumulated degradation stress count value of the second accumulated degradation-stress-amount holding circuit VT2. The accumulated number of times Acc_Cnt_TM is the accumulated number of times of the unit counting operation of the accumulated operating-time holding circuit TM. Then, the process goes to Step S22. Here, N = $\Sigma$ni.

The detailed determination flow in Step S23 is illustrated in FIG. 20.

In Step S231, the variation range of the correlation index $K_{q2}$, considering a variation having a voltage dependence f(V), is examined. Cnt1, Cnt2, and q2 satisfy Cnt1 = C1 * exp(-Ea1/kT), Cnt2 = f(V) * C2 * {exp (-Ea1/kT)}$^{q2}$, and q2 = Ea2/Ea1, respectively, and the correlation index $K_{q2}$ is represented as follows.

$$K_{q2} = (\text{Cnt2 accumulated value})/\{(\text{Cnt1 accumulated value})^{q2}/N^{q2-1}\}$$

$$= B(V) * (\{exp(-Ea1/kT)\}^{q2} \text{ accumulated value})/[\{exp(-Ea1/kT)$$

accumulated value$\}^{q2}/N^{q2-1}]$

$$f(\text{Vchipmin}) * (C2/C1^{q2}) \leq B(V) \leq f(\text{Vchipmax}) * (C2/C1^{q2})$$

Here, B (V) is a certain unknown value depending on a history of a voltage variation in the accumulated time period.

In Step S232, a variation range of the correlation index $K_{q2}$, further considering a variation of the temperature T in addition to the variation range of the correlation index $K_{q2}$ obtained in Step S231, is obtained.

Here, ({exp(-Ea1/kT)}$^{q2}$ accumulated value)/[{exp(-Ea1/kT) accumulated value}$^{q2}/N^{q2-1}$] in the above expression is equal to or larger than 1 and is equal to or smaller than $A_{q2}$. $A_{q2}$ is a preset known value in a case where the worst variation of the temperature T is considered. This is based on a relation between an accumulated value of the q2-th power of a value and the q2-th power of an accumulated value, which is similar to that described in "Specific Description of Second Embodiment of First Example". From above, the variation range of the correlation index $K_{q2}$ considering the variation of the temperature T is as follows.

$$f(\text{Vchipmin}) * (C2/C1^{q2}) \leq K_{q2} \leq f(\text{Vchipmax}) * A_{q2} * (C2/C1^{q2})$$

In Step S233, a correlation index $K_{q2\_tmp}$ calculated from actually measured values is calculated based on Cnt_T1tmp, Cnt_VT2tmp, and TMtmp acquired in Step S22. The correlation index $K_{q2\_tmp}$ is represented as follows.

$$K_{q2\_tmp} = \text{Cnt\_VT2tmp} / \{(\text{Cnt\_T1tmp})^{q2}/(\text{TMtmp})^{q2-1}\}$$

In Step S234, it is determined whether the correlation index $K_{q2\_tmp}$ obtained in Step S233 is smaller than the minimum value $K_{q2\_tmp\_MIN}$ of the past correlation index. In a case where the determination result is YES, the process goes to Step S235. In a case where the determination result is NO, the process goes to Step S236. An initial value of the minimum value $K_{q2\_tmp\_MIN}$ of the correlation index is a significantly large provisional value.

In Step S235, the minimum value $K_{q2\_tmp\_MIN}$ of the correlation index is stored as a correlation index $K_{q2\_tmp}$ in a storage area of the non-volatile memory NVM.

In Step S236, it is determined whether the correlation index $K_{q2\_tmp}$ is larger than the maximum value $K_{q2-tmp-MAX}$ of the correlation index Kq2. In a case where the determination result is YES, the process goes to Step S237. In a case where the determination result is NO, the process goes to Step S238. An initial value of the maximum value $K_{q2\_tmp\_MAX}$ of the correlation index is a provisional value of 0 (zero).

In Step S237, the maximum value $K_{q2\_tmp\_MAX}$ of the correlation index is stored as the correlation index $K_{q2\_tmp}$ in the storage area of the non-volatile memory NVM.

In Step S238, it is determined whether the following relation is established. In a case where the determination result is YES, the process goes to Step S239. In a case where the determination result is NO, the process goes to Step S240.

$$K_{q2\_tmp\_MAX}/K_{q2\_tmp\_MIN} < A_{q2} * f(Vchipmax)/f(Vchipmin)$$

In Step S239, it is determined that the accumulated degradation stress count values Cnt_T1tmp and Cnt_VT2tmp of the first and second accumulated degradation-stress-amount holding circuits T1 and VT2 for a predetermined time period are appropriate. In Step S240, it is determined that the accumulated degradation stress count values Cnt_T1tmp and Cnt_VT2tmp of the first and second accumulated degradation-stress-amount holding circuits T1 and VT2 for a predetermined time period are not appropriate.

According to the second example, by comparing values of two different types of accumulated stress counters one of which has a temperature dependence only and the other of which has a temperature dependence and a voltage dependence both of which are significant, with each other, it is possible to detect that there is an abnormality in an accumulated value of either of them. That is, the second example has an advantageous effect that it is possible to obtain a semiconductor device that can found the degree of degradation causing wear-out failure with high reliability in a simple manner.

<Modified Example>

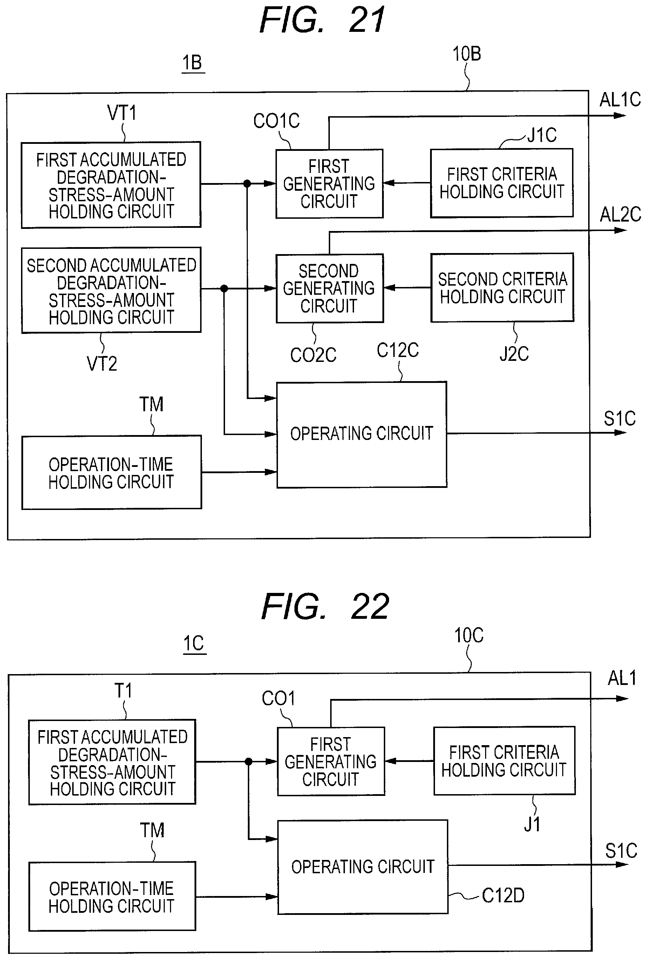

FIG. 21 is an explanatory diagram of a modified example of FIG. 14. A semiconductor device 1B is obtained by partly modifying the accumulated degradation stress detecting circuit 10A illustrated in FIG. 14. Therefore, a different portion is mainly described below. The accumulated degradation stress detecting circuit 10A in FIG. 14 includes the first accumulated degradation-stress-amount holding circuit T1, the first criteria holding circuit J1, and the first generating circuit C01. An accumulated degradation stress detecting circuit 10B in FIG. 21 includes a circuit for holding a first accumulated degradation stress count value (a first accumulated degradation-stress-amount holding circuit) VT1 and a circuit for holding a count value of a first criteria (determination standard) (a first criteria holding circuit) J1C. The accumulated degradation stress detecting circuit 10B further includes a circuit for generating an accumulated stress alarm signal AL1C (a first generating circuit) C01C.

The first accumulated degradation-stress-amount holding circuit VT1 is provided for measurement with regard to a first degradation factor (wear-out failure factor) having the temperature dependence Ea1 and a voltage dependence g(V). The first accumulated degradation stress count value Cnt1 is represented by Cnt1 $\propto$ g(V) * C1 * exp (-Ea1/kT). C1 is a constant related to a temperature dependence of the number of counts. The first accumulated degradation-stress-amount holding circuit VT1 can be used as an accumulated degradation stress counter for a degradation factor having large sensitivity not only to a temperature but also a voltage, for example, TDDB.

In addition, the configuration in FIG. 15A can be used as a specific circuit configuration of the first accumulated degradation stress-amount-holding circuit VT1. That is, the first accumulated degradation-stress-amount holding circuit VT1 includes the ring oscillator (RO3) and the accumulated stress counter (ACC_CNT3). Oscillation of the ring oscillator (RO3) having frequency characteristics in proportion to the temperature dependence Ea1 and the voltage dependence g (V) is counted by the accumulated stress counter (ACC_CNT3). An output of the accumulated stress counter (ACC_CNT3) is coupled to inputs of the first generating circuit C01C and the operating circuit C12C.

The first criteria holding circuit J1C holds a criteria with regard to the first degradation factor (wear-out failure factor) having the temperature dependence Ea1 and the voltage dependence g(V). The first generating circuit C01C generates the accumulated stress alarm signal AL1C when the first accumulated degradation stress count value (Cnt1 accumulated value) of the first accumulated degradation-stress-amount holding circuit VT1 reaches the first criteria (determination standard) held by the first criteria holding circuit J1C.

The operating circuit C12C performs desired calculation based on the accumulated degradation stress count values (Cnt1 accumulated value and Cnt2 accumulated value) of the first and second accumulated degradation-stress-amount holding circuits VT1 and VT2 and the count value N of the accumulated operating time of the accumulated operating-time holding circuit TM, thereby generating a signal S1C as a calculation result.

That is, in FIG. 21, the first and second accumulated degradation-stress-amount holding circuits VT1 and VT2 are each provided for evaluation of accumulated stress with regard to a degradation factor (wear-out failure factor) having a corresponding temperature dependence and a corresponding voltage dependence.

In the modified example of FIG. 21, an influence of a voltage on the correlation index $K_{q2}$ is f(Vchipmin)/g(Vchipmax) at minimum and is f(Vchipmax)/g(Vchipmin) at maximum from similar studies as those in FIGS. 14 to 20. That is, a standard for validity determination is as follows.

$$f(Vchipmin)/g(Vchipmax) * (C2/C1^{q2}) \leq K_{q2} \leq$$

$$f(Vchipmax)/g(Vchipmin) * A_{q2} * (C2/C1^{q2})$$

As a result, validity determination in the flow of FIG. 20 becomes as follows in the modified example of FIG. 21.

$$K_{q2\_tmp\_MAX}/K_{q2\_tmp\_MIN} < A_{q2} *$$

$$\{f(Vchipmax)/g(Vchipmin)\}/\{f(Vchipmin)/g(Vchipmax)\}$$

This ratio is also approximately constant irrespective of chips. For example, when g(V) = V^n1 and f(V) = V^n2, the following relation is established.

$$\{f(Vchipmax)/g(Vchipmin)\}/\{f(Vchipmin)/g(Vchipmax)\}$$

$$= (Vchipmax / Vchipmin)^{\wedge}(n1 + n2)$$

Third Example

FIG. 22 is an explanatory diagram of a semiconductor device according to a third example. A semiconductor device 1C includes an accumulated degradation stress detecting circuit 10C. The accumulated degradation stress detecting circuit 10C includes the circuit for holding a first accumulated degradation stress count value (the first accumulated degradation-stress-amount holding circuit) T1, the circuit for holding a count value of the first criteria (determination standard) (the first criteria holding circuit) J1, and the circuit for generating the accumulated stress alarm signal AL1 (the first generating circuit) C01. The circuit C01 for generating the accumulated stress alarm signal AL1 compares the first accumulated degradation stress count value and the count value of the first criteria with each other to generate the accumulated stress alarm signal AL1.

The accumulated degradation stress detecting circuit 10C further includes the circuit for holding a count value of an accumulated operating time of the semiconductor device 1C or a value corresponding that count value (the accumulated operating-time holding circuit) TM and a circuit for receiving the first accumulated degradation stress count value and the count value of the accumulated operating time or the value corresponding to the count value of the accumulated operating time (an operating circuit, an operating unit) C12D. The operating circuit C12D performs desired calculation based on the first accumulated degradation stress count value and the count value of the accumulated operating time, thereby generating a signal S1C as a calculation result. The operating circuit C12D may be configured by software by the central processing unit CPU of the semiconductor device 1C. Alternatively, the operating circuit C12D may be achieved by an external data processing device, an external server, or the like, coupled to the semiconductor device 1C.

When the count value of the first accumulated degradation-stress-amount holding circuit T1 reaches a predetermined value or more, the first generating circuit C01 outputs the alarm signal AL1. The semiconductor device 1C is formed by one semiconductor chip (semiconductor substrate), but is not limited thereto. The first generating circuit (C01), the first criteria holding circuit (J1), and the operating circuit C12D may be configured as hardware circuits in the semiconductor device 1C, or may be configured by software, for example, by the central processing unit CPU provided in the semiconductor device 1C. The first accumulated degradation-stress-amount holding circuit T1 can use the ring oscillator RO1 and the accumulated stress counter ACC_CNT1 in FIG. 4A and the ring oscillator in FIG. 7.

The first accumulated degradation-stress-amount holding circuit T1 is provided for evaluation of the degree of wear-out failure with regard to the first degradation factor (wear-out failure factor) having the temperature dependence Ea1, and is configured in such a manner that the number of counts Cnt1 for a predetermined time period during which the temperature T can be regarded as being approximately constant is in proportion to exp (-Ea1/kT) . The number of counts Cnt1 is represented by Cnt1 = C1 * exp(-Ea1/kT). Here, C1 is a constant.

The accumulated operating-time holding circuit TM holds an accumulated count time of the first accumulated degradation-stress-amount holding circuit T1 or a value corresponding thereto. The corresponding value is a value N that represents, in a case where a counting operation is divided into unit counting operations (each of which is a counting operation for a time period during which the temperature can be regarded as being approximately constant and which occurs at a predetermined period) , the accumulated number of times of the unit counting operation, for example. The following description is given by using the value N. If the accumulated count time is used, it can be represented by N*"time of one unit counting operation". Alternatively, in a configuration in which the count value Cnt1 is intermittently acquired by the accumulated stress counter provided in the first accumulated degradation-stress-amount holding circuit T1, the corresponding value is a number N that represents the accumulated number of times of the intermittent counting operation. In a case of the intermittent operation, it is necessary to consider that the accumulated count time is not equal to the accumulated stress time. However, a ratio of them has been found at a time of design, and therefore can be corrected. A value other than the value N, which is equivalent to the value N, may be used in accordance with the spirit of the present disclosure.

That is, in the configuration in FIG. 22, the circuit T2 for holding the second accumulated degradation stress count value, the circuit J2 for holding the count value with regard to the second criteria, and the circuit C02 for generating the accumulated stress alarm signal AL2 are removed from the configuration in FIG. 1.

The operating circuit C12D estimates a virtual accumulated degradation stress count value (Cnt3 accumulated value) corresponding to the temperature dependence Ea3 (Ea3 = q * Ea1) from an accumulated value of the count value Cnt1 of the first accumulated degradation-stress-amount holding circuit T1 and an actually measured value of the value N that is the accumulated count time of the accumulated operating-time holding circuit TM. In the first embodiment of the first example in FIG. 2, the virtual accumulated degradation stress count value (Cnt3 accumulated value) can be estimated with high accuracy from two values, i.e., the count values Cnt1 and Cnt2 of the first and second accumulated degradation-stress-amount holding circuits T1 and T2. In the third example in FIG. 22, it is considered that the virtual accumulated degradation stress count value (virtual Cnt3 accumulated value) is estimated as a worst value. This method uses the way of thinking of the second embodiment of the first example in FIG. 3.

When the virtual accumulated stress count value having the temperature dependence Ea3 is defined as $Cnt3 = C1^q * \exp(-Ea3/kT)$, the correlation index $K_q$ between Cnt1 accumulated value and Cnt3 accumulated value, represented as $K_q$ = (Cnt3 accumulated value) / { (Cnt1 accumulated value)$^q$/$N^{q-1}$}, is 1 or more and $A_q$ or less. $A_q$ is a known value considering the worst variation of the temperature T. From the worst value of the correlation index $K_{q\_wst} = A_q$, the Cnt1 accumulated value, and the actually measured value of N, it is possible to calculate back and estimate the worst value of the Cnt3 accumulated value. A coefficient of the virtual accumulated stress count value Cnt3 is set to $C1^q$, and, for example, a value corresponding to $C2/C1^q$ in FIG. 3 is normalized to 1. It suffices that a graph on right side in each of FIGS. 9F and 11F is read as $K_{q\_wst} = A_q = 2$ for q = 1.5, and $K_{q\_wst} = A_q$ = about 4 for q = 2, for example. These values can be changed in accordance with the worst variation of the temperature T that is expected. However, a result of estimation from a temperature profile expected in an actual product is about the same as this result, and the following relation is satisfied.

$$\text{(worst value of Cnt3 accumulated value)} = K_{q\_wst} * \{(\text{Cnt1 accumulated value})^q/N^{q-1}\}$$

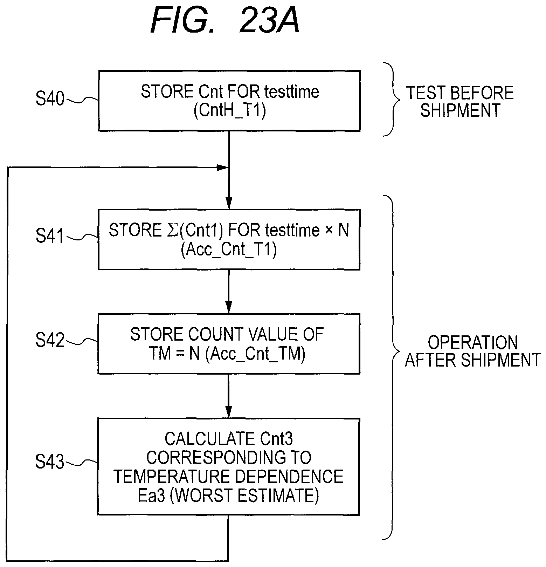

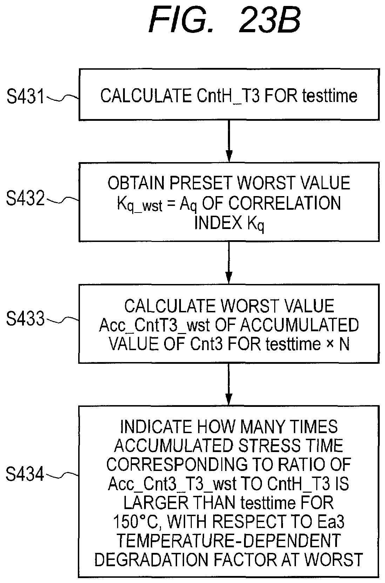

FIGS. 23A and 23B illustrate an implementation flow in a case of using the operating circuit C12D illustrated in FIG. 22. FIG. 23A illustrates an entire implementation flow of the third example. FIG. 23B illustrates a detailed calculation flow in Step S43 in FIG. 23A. First, presumption is described. A test time of a test before shipment, testtime, is used as a unit of time in place of a time for one unit counting operation. testtime is a short time period during which a temperature is approximately constant. The test before shipment is performed at a temperature T of 150 °C.

Step S40 is performed in the test before shipment of the semiconductor device 1C. In Step S40, the count value Cnt1 of the first accumulated degradation-stress-amount holding circuit T1 for testtime at 150 °C is acquired and stored as CntH_T1.

Steps S41 to S43 are performed during an operation of the semiconductor device 1C after shipment of the semiconductor device 1C. In Step S41, the accumulated degradation stress count value (Cnt1 accumulated value) of the first accumulated degradation-stress-amount holding circuit T1 for testtime × N is acquired and stored as Acc_Cnt_T1. In Step S42, the accumulated number of times N of the unit operation of the accumulated operating-time holding circuit TM is acquired and stored as Acc_Cnt_TM. In Step S43, the virtual accumulated degradation stress count value (Cnt3 accumulated value) corresponding to the temperature dependence Ea3 is calculated, and the worst value is estimated. It is not necessary to perform Step S43 every time.

In FIG. 23B, the worst value of the virtual accumulated degradation stress count value corresponding to the temperature dependence Ea3 is estimated. That is, in Step S431, the degradation stress count value Cnt3 corresponding to the temperature dependence Ea3 is defined as follows.

$$Cnt3 = C1^q * exp(-Ea3/kT) = (Cnt1)^q,$$

wherein Cnt1 = C1* exp(-Ea1/kT).

Then, the virtual accumulated degradation stress count value CntH_T3 for testtime is calculated. The virtual accumulated degradation stress count value CntH_T3 is as follows.

$$CntH\_T3 = (CntH\_T1)^q$$

Here, q = Ea3/Ea1.

In Step S432, for the correlation index $K_q$ defined below, a preset worst value $K_{q\_wst} = A_q$ is obtained. The correlation index $K_q$ is as follows.

$$K_q = (Cnt3\ accumulated\ value)/\{(Cnt1\ accumulated\ value)^q/N^{q-1}\}$$

$$= \{(Cnt1)^q\ accumulated\ value\}/\{(Cnt1\ accumulated\ value)^q/N^{q-1}\}$$

In Step S433, the worst value Acc_Cnt_T3_wst of the virtual accumulated stress count value (Cnt3 accumulated value) for testtime × N is estimated as follows.

$$Acc\_Cnt\_T3\_wst = K_{q\_wst} * \{(Acc\_Cnt\_T1)^q/(Acc\_Cnt\_TM)^{q-1}\}$$

In step S434, a ratio of obtained Acc_Cnt_T3_wst to CntH_T3 indicates the worst possible accumulated degradation stress time that has reached at the moment with regard to the degradation factor having the temperature dependence Ea3, with the testtime at 150 °C as the unit.

Fourth Example

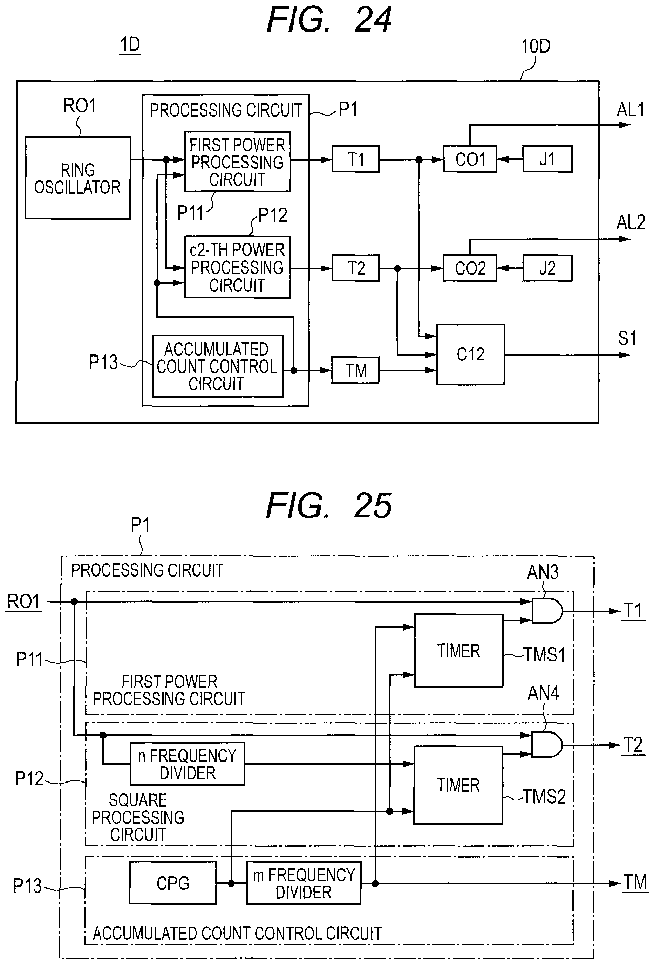

FIG. 24 is an explanatory diagram of a semiconductor device according to a fourth example. A semiconductor device 1D can be used in the first example, and in particular has a configuration applicable to FIGS. 4A to 4C, FIG. 5, or FIG. 6. In this configuration, counting operations of the accumulated stress counter ACC_CNT1 of the first accumulated degradation-stress-amount holding circuit T1 and the accumulated stress counter ACC_CNT2 of the second accumulated degradation-stress-amount holding circuit T2 are controlled by one ring oscillator (RO1). The ring oscillator RO1 can use the configuration of the ring oscillator ROS in FIG. 7. Difference from the first example is described below.

The semiconductor device 1D is provided with the ring oscillator RO1 and a processing circuit P1. The processing circuit P1 includes a first power processing circuit P11, a q2-th power processing circuit P12, and an accumulated count control circuit P13. The first accumulated degradation-stress-amount holding circuit T1 receives an output of the ring oscillator RO1 through the first power processing circuit P11. The second accumulated degradation-stress-amount holding circuit T2 receives the output of the ring oscillator RO1 through the q2-th power processing circuit P12. The first accumulated degradation-stress-amount holding circuit T1 is an accumulated degradation stress counter with regard to a degradation factor having a temperature dependence Ea1. The second accumulated degradation-stress-amount holding circuit T2 is an accumulated degradation stress counter with regard to a degradation factor having a temperature dependence Ea2 (= q2 * Ea1). The accumulated count control circuit P13 performs control in such a manner that the accumulated operating-time holding circuit TM can obtain an accumulated count time or a value corresponding thereto. The accumulated count control circuit P13 also controls the first power processing circuit P11 and the q2-th power processing circuit P12.

FIG. 25 illustrates a specific configuration example of the processing circuit in FIG. 24. FIG. 25 illustrates a case where q2 = 2, that is, a case where the q2-th power processing circuit P12 is a square processing circuit. In the accumulated count control circuit P13, a clock obtained by 1/m frequency division of a reference clock of a reference clock generation circuit CPG is input to the accumulated operating-time holding circuit TM. As the reference clock generating circuit CPG, a clock generating circuit for the entire semiconductor device 1D can be diverted. The accumulated operating-time holding circuit TM measures the accumulated count time by counting the number of rising edges (rise number of times) of the clock obtained by 1/m frequency division. The first power processing circuit P11 includes an AND circuit AN3 that performs gating of input of the output of the ring oscillator RO1 to the first accumulated degradation-

stress-amount holding circuit T1 by a timer TMS1 with a fixed time S. That is, only in the fixed time S from the rising edge (rise-edge) of the clock obtained by 1/m frequency division, the output of the ring oscillator RO1 reaches the first accumulated degradation-stress-amount holding circuit T1. The square power processing circuit P12 includes an AND circuit AN4 that performs gating of input of the output of the ring oscillator RO1 to the second accumulated degradation-stress-amount holding circuit T2 by a timer TMS2 with the fixed time S. Unlike the first power processing circuit P11, only in the fixed time S from a rising edge (rise-edge) of a clock obtained by 1/n frequency division of the ring oscillator RO1, the output of the ring oscillator RO1 reaches the second accumulated degradation-stress-amount holding circuit T2. The timers TMS1 and TMS2 each count the fixed time S by using an oscillation clock of the reference clock generating circuit CPG as a reference time.

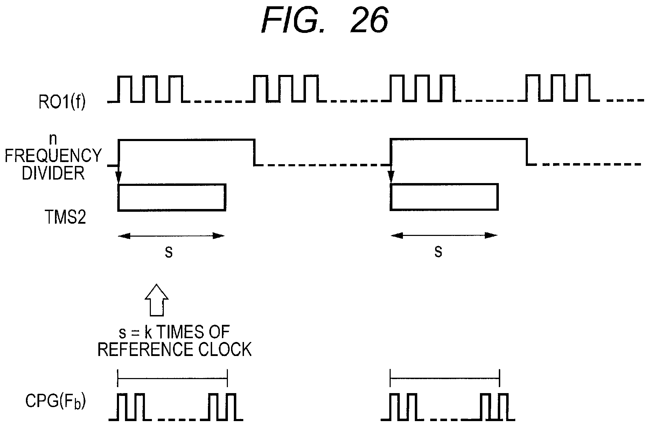

FIG. 26 illustrates an operation waveform of the square processing circuit P12 in FIG. 25. In the square processing circuit P12, the second accumulated degradation-stress-amount holding circuit T2 counts up oscillation of the ring oscillator RO1 for the fixed time S from the rising edge (rise-edge) of the clock obtained by 1/n frequency division of the oscillation of the ring oscillator RO1 as a trigger. As a result of this, the number of counts acquired by the second accumulated degradation-stress-amount holding circuit T2 per second is $(f \times S) \times (f/n) = f^2 \times (S/n)$, assuming that the frequency of the ring oscillator RO1 is f, because the number of counts for the fixed time S is $(f \times S)$, and that count is performed $(f/n)$ times per second.

That is, the number of counts acquired by the second accumulated degradation-stress-amount holding circuit T2 per second is proportional to $f^2$. The ring oscillator RO1 is designed to have property of $f \propto \exp(-Ea1/kT)$. Thus, the number of counts acquired by the second accumulated degradation-stress-amount holding circuit T2 per second is proportional to $\exp(-2*Ea1/kT)$. That is, an accumulated degradation stress counter with regard to a degradation factor having the temperature dependence Ea2 (= 2 * Ea1) is obtained. Although an operation waveform of the first power processing circuit P11 is not illustrated, the number of times of the operation is $(f \times S) \times (F_b/m) = f \times (S \times F_b/m)$ because it is performed $(f \times s)$ times for the fixed time S, and is performed $(F_b/m)$ times per second. Here, $F_b$ is the frequency of the reference clock generated by the reference clock generating circuit CPG. That is, the number of counts acquired by the first accumulated degradation-stress-amount holding circuit T1 per second is proportional to f. An accumulated degradation stress counter with regard to a degradation factor having the temperature dependence Ea1 is obtained.

According to the fourth example, an accumulated degradation stress counter with regard to two degradation factors having different temperature dependences from each other can be obtained from one ring oscillator. Therefore, it is possible to obtain a semiconductor device that can further perform prediction of wear-out failure with regard to a degradation factor having a temperature dependence Ea3 by the method described in FIG. 2 and the like.

As mentioned above, the invention made by the inventors has been specifically described by way of examples and modified examples. However, it is needless to say that the present invention is not limited thereto, but can be modified in various ways.

For example, three accumulated degradation-stress-amount holding circuits may be provided in an accumulated degradation stress detecting circuit of a semiconductor device, for example. That is, the accumulated degradation-stress-amount holding circuit VT1 (with regard to the degradation factor (wear-out failure factor) having the temperature dependence Ea2 and the voltage dependence f(V) in FIG. 14 may be provided in addition to the first accumulated degradation-stress-amount holding circuit T1 (with regard to the degradation factor (wear-out failure factor) having the temperature dependence Ea1) and the second accumulated degradation-stress-amount holding circuit T2 (with regard to the degradation factor (wear-out failure factor) having the temperature dependence Ea2) in FIGS. 1 to 6.

## Claims

1. A semiconductor device comprising:

   a first circuit that holds a first accumulated degradation stress count value;
   a second circuit that holds a second accumulated degradation stress count value;
   a third circuit that holds a count value of an accumulated operating time or a value corresponding thereto, and
   a fourth circuit or an operating unit that receives the first accumulated degradation stress count value, the second accumulated degradation stress count value, and the count value of the accumulated operating time or the value corresponding to the value of the accumulated operating time.

2. The semiconductor device according to Claim 1,
   wherein the fourth circuit or the operating unit calculates a third accumulated degradation stress count value different from the first accumulated degradation stress count value and the second accumulated degradation stress count value.

3. The semiconductor device according to Claim 1,
wherein the fourth circuit or the operating unit determines whether the first accumulated degradation stress count value and the second accumulated degradation stress count value are appropriate.

4. The semiconductor device according to Claim 1,
wherein the first circuit includes a first ring oscillator and a first accumulated stress counter that counts an output of the first ring oscillator, and
wherein the second circuit includes a second ring oscillator and a second accumulated stress counter that counts an output of the second ring oscillator.

5. The semiconductor device according to Claim 4,
wherein the third circuit includes a timer and an accumulated time holding circuit that receives an output of the timer.

6. The semiconductor device according to Claim 4,
wherein the third circuit includes an intermittent operation control circuit that controls an intermittent operation and an accumulated count time holding circuit that counts and holds an output of the intermittent operation control circuit.

7. The semiconductor device according to Claim 1, further comprising a saving control circuit and a non-volatile memory,
wherein the saving control circuit performs control that saves the first accumulated degradation stress count value, the second accumulated degradation stress count value, and the count value of the accumulated operating time or the value corresponding to the value of the accumulated operating time into the non-volatile memory.

8. The semiconductor device according to Claim 1,
wherein the first accumulated degradation stress count value is related to a first degradation factor having a first temperature dependence, and
wherein the second accumulated degradation stress count value is related to a second degradation factor having a second temperature dependence different from the first temperature dependence.

9. The semiconductor device according to Claim 1,
wherein the first accumulated degradation stress count value is related to a first degradation factor having a first temperature dependence, and
wherein the second accumulated degradation stress count value is related to a second degradation factor having a second temperature dependence and a voltage dependence.

10. The semiconductor device according to Claim 1,
wherein the first accumulated degradation stress count value is related to a first degradation factor having a first temperature dependence and a first voltage dependence, and
wherein the second accumulated degradation stress count value is related to a second degradation factor having a second temperature dependence and a second voltage dependence.

11. The semiconductor device according to Claim 1, further comprising:

    a ring oscillator; and
    a processing circuit coupled to an output of the ring oscillator, wherein
    the processing circuit includes
    a circuit that supplies a value that is proportional to a frequency of the ring oscillator to the first circuit, and
    a circuit that supplies a value that is proportional to a q2-th power of the frequency of the ring oscillator to the second circuit.

12. A semiconductor device comprising:

    a first circuit that holds a first accumulated degradation stress count value;
    a second circuit that holds a count value of an accumulated operating time and a value corresponding thereto; and
    a third circuit or an operating unit that receives the first accumulated degradation stress count value and the count value of the accumulated operating time or the value corresponding to the value of the accumulated operating time,
    wherein the third circuit or the operating unit calculates a second accumulated degradation stress count value different from the first accumulated degradation stress count value.

**13.** The semiconductor device according to Claim 12,
wherein the first accumulated degradation stress count value is related to a first degradation factor having a first temperature dependence, and
wherein the second accumulated degradation stress count value is related to a second degradation factor having a second temperature dependence different from the first temperature dependence.

**14.** The semiconductor device according to Claim 12, further comprising:

a fourth circuit that holds a criteria; and
a circuit that compares the first accumulated degradation stress count value and the criteria with each other to generate an alarm signal,
wherein the first circuit includes a ring oscillator and an accumulated stress counter that is coupled to an output of the ring oscillator and holds the first accumulated degradation stress count value.

**15.** A semiconductor device comprising:

a first accumulated degradation-stress-amount holding circuit that holds a first accumulated degradation stress count value;
a first criteria holding circuit that holds a count value of a first criteria;
a first generating circuit that compares the first accumulated degradation stress count value and the count value of the first criteria with each other to generate a first alarm signal;
a second accumulated degradation-stress-amount holding circuit that holds a second accumulated degradation stress count value;
a second criteria holding circuit that holds a count value of a second criteria;
a second generating circuit that compares the second accumulated degradation stress count value and the count value of the second criteria with each other to generate a second alarm signal;
an accumulated operating-time holding circuit that holds a count value of an accumulated operating time of the semiconductor device or a value corresponding thereto, and
a circuit that receives the first and second accumulated degradation stress count values and the count value of the accumulated operating time or the value corresponding to the value of the accumulated operating time.

**16.** The semiconductor device according to Claim 15,
wherein each of the first accumulated degradation-stress-amount holding circuit and the second accumulated degradation-stress-amount holding circuit includes a ring oscillator and an accumulated stress counter that counts an output of the ring oscillator.

**17.** The semiconductor device according to Claim 16,
wherein the ring oscillator oscillates at a frequency having a temperature dependence.

**18.** The semiconductor device according to Claim 16,
wherein the ring oscillator oscillates at a frequency having a voltage dependence.

**19.** The semiconductor device according to Claim 16,
wherein the ring oscillator of the first accumulated degradation-stress-amount holding circuit oscillates at a frequency having an exponential temperature dependence, and
wherein the ring oscillator of the second accumulated degradation-stress-amount holding circuit oscillates at a frequency having an exponential temperature dependence and a voltage dependence.

**20.** The semiconductor device according to Claim 16,
wherein the ring oscillator of the first accumulated degradation-stress-amount holding circuit and the ring oscillator of the second accumulated degradation-stress-amount holding circuit are arranged to be close to each other.

# FIG. 1

1     10

AL1

| T1 | | CO1 | | J1 |
FIRST ACCUMULATED DEGRADATION-STRESS-AMOUNT HOLDING CIRCUIT

FIRST GENERATING CIRCUIT

FIRST CRITERIA HOLDING CIRCUIT

AL2

SECOND ACCUMULATED DEGRADATION-STRESS-AMOUNT HOLDING CIRCUIT

T2

SECOND GENERATING CIRCUIT

SECOND CRITERIA HOLDING CIRCUIT

CO2     C12     J2

TM

ACCUMULATED OPERATION-TIME HOLDING CIRCUIT

OPERATING CIRCUIT

S1

# FIG. 2

C12A     T3

AL3

CO3     J3

T1
T2
TM

THIRD ACCUMULATED DEGRADATION-STRESS-AMOUNT HOLDING CIRCUIT

S1

THIRD GENERATING CIRCUIT

THIRD CRITERIA HOLDING CIRCUIT

## FIG. 3

```
                              C12B        AJ1
                        ┌──────────┼──────────────────┐
                        │          ┌──────────────────┐│
   T1 ─────────────────────────▶  │                  ││
                        │         │    VALIDITY      ││
   T2 ─────────────────────────▶  │   DETERMINING    │├──▶ S1
                        │         │     CIRCUIT      ││
   TM ─────────────────────────▶  │                  ││
                        │          └──────────────────┘│
                        └─────────────────────────────┘
```

## FIG. 4A

```
                                        ACC_CNT1
        ┌──────────────────────────────────┼─────────────┐
   T1   │              RO1                  │             │
   ─────│      ┌──────────────────┐   ┌──────────────┐   │──▶ CO1
        │      │  RING OSCILLATOR  │──▶│  ACCUMULATED │   │    C12
        │      │                  │   │ STRESS COUNTER│   │   (C12A, C12B)
        │      └──────────────────┘   └──────────────┘   │
        └──────────────────────────────────────────────┘
```

## FIG. 4B

```
                                        ACC_CNT2
        ┌──────────────────────────────────┼─────────────┐
   T2   │              RO2                  │             │
   ─────│      ┌──────────────────┐   ┌──────────────┐   │──▶ CO2
        │      │  RING OSCILLATOR  │──▶│  ACCUMULATED │   │    C12
        │      │                  │   │ STRESS COUNTER│   │   (C12A, C12B)
        │      └──────────────────┘   └──────────────┘   │
        └──────────────────────────────────────────────┘
```

27

## FIG. 4C

TM

TM1
TIMER

HL1
ACCUMULATED
TIME HOLDING
CIRCUIT

→ C12
(C12A, C12B)

## FIG. 5

RO1

AN1

ACC_CNT1

T1

RING
OSCILLATOR

ACCUMULATED
STRESS COUNTER

→ CO1
C12
(C12A, C12B)

RO2

AN2

T2

RING
OSCILLATOR

ACCUMULATED
STRESS COUNTER

→ CO2
C12
(C12A, C12B)

ACC_CNT2

TM

INTERMITTENT
OPERATION
CONTROL CIRCUIT

ACCUMULATED
COUNT TIME
HOLDING CIRCUIT

→ C12
(C12A, C12B)

IOC1

AO
OPERATION SIGNAL

HL11

## FIG. 6

# FIG. 7

# FIG. 8

## FIG. 9A

TEMPERATURE (°C)

## FIG. 9B

q

## FIG. 9C

## FIG. 9D

## FIG. 9E

TEMPERATURE (°C)

## FIG. 9F

q

## FIG. 10A

## FIG. 10B

## FIG. 11A

TEMPERATURE (°C)

## FIG. 11B

$(q-1)*\sqrt{(q)}$

## FIG. 11C

## FIG. 11D

## FIG. 11E

## FIG. 11F

## FIG. 12A

S1 — STORE Cnt1 FOR testtime
(CntH_T1)

S2 — STORE Cnt2 FOR testtime
(CntH_T2)

TEST BEFORE
SHIPMENT

S3 — STORE Σ(Cnt1) FOR testtime × N
(Acc_Cnt_T1)

S4 — STORE Σ(Cnt2) FOR testtime × N
(Acc_Cnt_T2)

S5 — STORE COUNT VALUE OF
TM = N (Acc_Cnt_TM)

S6 — CALCULATE Cnt3
CORRESPONDING TO
TEMPERATURE DEPENDENCE Ea3

OPERATION
AFTER SHIPMENT

## FIG. 12B

S61 — OBTAIN B FROM test RESULT

S62 — DEFINE STRESS COUNT VALUE Cnt2_nrm OF T2 NORMALIZED WITH B

S63 — OBTAIN RELATION BETWEEN CORRELATION INDEX $K_{q2}$ OF NORMALIZED ACCUMULATED VALUE AND $(q-1) * \sqrt{(q)}$

S64 — OBTAIN $K_q$ CORRESPONDING TO q = Ea3/Ea1 ON STRAIGHT LINE OF Y-AXIS LOGARITHM

S65 — CALCULATE BACK Acc_Cnt3_T3_nrm FROM kq

S66 — CALCULATE ACCUMULATED COUNT VALUE OF Cnt3_nrm FOR testtime

S67 — INDICATE HOW MANY TIMES ACCUMULATED STRESS TIME CORRESPONDING TO RATIO OF Acc_Cnt3_T3_nrm AND Cnt3_nrm IS LARGER THAN testtime FOR 150 °C, WITH RESPECT TO Ea3 TEMPERATURE-DEPENDENT DEGRADATION FACTOR

# FIG. 13A

S10 — STORE Cnt1 FOR testtime (CntH_T1)

↓

S11 — STORE Cnt2 FOR testtime (CntH_T2)

TEST BEFORE SHIPMENT

↓

S12 — STORE $\Sigma$(Cnt1), $\Sigma$(Cnt2), AND ni FOR testtime × ni (Cnt_T1tmp, Cnt_T2tmp, AND TMtmp)

↓

S13 — ARE Cnt_T1tmp AND Cnt_T2tmp APPROPRIATE FROM MUTUAL COMPARISON? — NO

YES

↓

S14 — ADD Cnt_T1tmp, Cnt_T2tmp, AND TMtmp TO (Acc_Cnt_T1, Acc_Cnt_T2, AND Acc_Cnt_TM) FOR testtime × N, RESPECTIVELY, AND STORE THEM

OPERATION AFTER SHIPMENT

## FIG. 13B

S131 — OBTAIN B FROM test RESULT

S132 — CALCULATE B*A$_{q2}$

S133 — CALCULATE K$_{q2\_tmp}$ FROM ACTUALLY MEASURED VALUE

S134

B$\leqq$K$_{q2\_tmp}$$\leqq$B*A$_{q2}$?

NO

YES

S136

S135 — Cnt_T1tmp AND Cnt_T2tmp FOR PERIOD testtime × ni ARE APPROPRIATE

Cnt_T1tmp AND Cnt_T2tmp FOR PERIOD testtime × ni ARE NOT APPROPRIATE

## FIG. 14

1A                                                           10A

                                                                           AL1

T1                              CO1                              J1

FIRST ACCUMULATED
DEGRADATION-              →  FIRST         ←  FIRST CRITERIA
STRESS-AMOUNT               GENERATING      HOLDING CIRCUIT
HOLDING CIRCUIT            CIRCUIT
                                                                           AL2C

SECOND ACCUMULATED
DEGRADATION-             →  SECOND        ←  SECOND CRITERIA
STRESS-AMOUNT              GENERATING      HOLDING CIRCUIT
HOLDING CIRCUIT           CIRCUIT

VT2                       CO2C     C12C                J2C

TM

                                                                           S1C

ACCUMULATED           →  OPERATING CIRCUIT
OPERATION-TIME
HOLDING CIRCUIT

## FIG. 15A

                                          ACC_CNT3

VT2                RO3

                                                                    CO2C
       RING OSCILLATOR  →  ACCUMULATED        →     C12C
                            STRESS COUNTER

## FIG. 15B

## FIG. 16A

# FIG. 16B

CNA1

# FIG. 17

# FIG. 18

*FIG. 19*

S20 — STORE Cnt1 FOR testtime (CntH_T1)

TEST BEFORE SHIPMENT

S21 — STORE Cnt2 FOR testtime (CntH_VT2)

S22 — STORE $\Sigma$(Cnt1), $\Sigma$(Cnt2), AND ni FOR testtime × ni (Cnt_T1tmp, Cnt_VT2tmp, AND TMtmp)

S23 — ARE Cnt_T1tmp AND Cnt_T2tmp APPROPRIATE FROM MUTUAL COMPARISON?

NO

YES

S24 — ADD Cnt_T1tmp, Cnt_VT2tmp, AND TMtmp TO (Acc_Cnt_T1, Acc_Cnt_VT2, AND Acc_Cnt_TM) FOR testtime × N, RESPECTIVELY, AND STORE THEM

OPERATION AFTER SHIPMENT

## FIG. 20

S231 — STUDY VARIATION RANGE OF $K_{q2}$ CONSIDERING CHANGE OF $f(V)$

S232 — OBTAIN VARIATION RANGE OF $K_{q2}$ CONSIDERING CHANGE OF T

S233 — CALCULATE $K_{q2\_tmp}$

S234 — $K_{q2\_tmp} < K_{q2\_tmp\_MIN}$?

NO

YES

S235 — STORE $K_{q2\_tmp\_MIN} = K_{q2\_tmp}$

S236 — $K_{q2\_tmp} > K_{q2\_tmp\_MAX}$?

NO

YES

S237 — STORE $K_{q2\_tmp\_MAX} = K_{q2\_tmp}$

S238 — $K_{q2\_tmp\_MAX}/K_{q2\_tmp\_MIN} < A_{q2} * f(Vchipmax)/f(Vchipmin)$?

NO

YES

S239 — Cnt_T1tmp AND Cnt_VT2tmp ARE APPROPRIATE

S240 — NOT APPROPRIATE

## FIG. 21

<u>1B</u>                                                    10B

VT1                              CO1C                                    J1C

| FIRST ACCUMULATED DEGRADATION-STRESS-AMOUNT HOLDING CIRCUIT |     | FIRST GENERATING CIRCUIT |     | FIRST CRITERIA HOLDING CIRCUIT |

AL1C

| SECOND ACCUMULATED DEGRADATION-STRESS-AMOUNT HOLDING CIRCUIT |     | SECOND GENERATING CIRCUIT |     | SECOND CRITERIA HOLDING CIRCUIT |

AL2C

VT2                              CO2C          C12C                    J2C

TM

| OPERATION-TIME HOLDING CIRCUIT |     | OPERATING CIRCUIT |

S1C

## FIG. 22

<u>1C</u>                                                    10C

AL1

T1                               CO1                                    

| FIRST ACCUMULATED DEGRADATION-STRESS-AMOUNT HOLDING CIRCUIT |     | FIRST GENERATING CIRCUIT |     | FIRST CRITERIA HOLDING CIRCUIT |

J1

TM

| OPERATION-TIME HOLDING CIRCUIT |     | OPERATING CIRCUIT |

S1C

C12D

## FIG. 23A

S40 — STORE Cnt FOR testtime
(CntH_T1)

$\left.\right\}$ TEST BEFORE
SHIPMENT

S41 — STORE $\Sigma$(Cnt1) FOR testtime × N
(Acc_Cnt_T1)

S42 — STORE COUNT VALUE OF
TM = N (Acc_Cnt_TM)

S43 — CALCULATE Cnt3
CORRESPONDING TO
TEMPERATURE DEPENDENCE
Ea3 (WORST ESTIMATE)

OPERATION
AFTER SHIPMENT

# FIG. 23B

S431 — CALCULATE CntH_T3 FOR testtime

S432 — OBTAIN PRESET WORST VALUE
$K_{q\_wst} = A_q$ OF CORRELATION
INDEX $K_q$

S433 — CALCULATE WORST VALUE
Acc_CntT3_wst OF ACCUMULATED
VALUE OF Cnt3 FOR testtime × N

S434 — INDICATE HOW MANY TIMES
ACCUMULATED STRESS TIME
CORRESPONDING TO RATIO OF
Acc_Cnt3_T3_wst TO CntH_T3 IS
LARGER THAN testtime FOR
150°C, WITH RESPECT TO Ea3
TEMPERATURE-DEPENDENT
DEGRADATION FACTOR AT WORST

# FIG. 24

# FIG. 25

# FIG. 26

RO1(f)

n
FREQUENCY
DIVIDER

TMS2

s

s = k TIMES OF
REFERENCE CLOCK

CPG(Fb)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016237421 A

- JP 2011227756 A